# FASCICULE DE BREVET EUROPEEN

(11) **EP 3 610 372 B1**
(45) Date de publication et mention de la délivrance du brevet: **31.03.2021**
(21) Numéro de dépôt: 18715216.0
(22) Date de dépôt: 20.03.2018
(51) Int. Cl.: G06F 9/32, G06F 21/12, G06F 21/50, H04L 9/00

(54) **PROCÉDÉ D'EXÉCUTION D'UN CODE MACHINE D'UNE FONCTION SÉCURISÉE**
VERFAHREN ZUM AUSFÜHREN EINES MASCHINENCODES EINER SICHEREN FUNKTION
METHOD FOR EXECUTING A MACHINE CODE OF A SECURE FUNCTION

(30) Priorité: 11.04.2017 FR 1753175
(43) Date de publication de la demande: 19.02.2020
(73) Titulaire: Commissariat à l'Énergie Atomique et aux Énergies Alternatives, 75015 Paris (FR); Sorbonne Université, 75006 Paris 6 (FR); Centre National de la Recherche Scientifique, 75016 Paris (FR)
(72) Inventeur: COUROUSSE, Damien, 38100 Grenoble (FR); HEYDEMANN, Karine, 75013 Paris (FR); BARRY, Thierno, 38100 Grenoble (FR)
(74) Mandataire: Colombo, Michel
(86) Numéro de dépôt international: PCT/FR2018/050678
(87) Numéro de publication internationale: WO 2018/189443

(56) Documents cités:
- US-A1- 2011 078 420
- Jean-François Lalande ET AL: "Software Countermeasures for Control Flow Integrity of Smart Card C Codes" In: "Network and Parallel Computing", 1 janvier 2014 (2014-01-01), Springer International Publishing, Cham 032548, XP055442952, ISSN: 0302-9743 ISBN: 978-3-642-01969-2 vol. 8713, pages 200-218, DOI: 10.1007/978-3-319-11212-1_12, pages 200-203 pages 207-208 pages 210-213 figures 5-8
- WERNER MARIO ET AL: "Protecting the Control Flow of Embedded Processors against Fault Attacks", 10 mars 2016 (2016-03-10), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 161 - 176, XP047345561, ISSN: 0302-9743 ISBN: 978-3-642-01969-2 [extrait le 2016-03-10] pages 161-165 pages 170-172 figure 1
- Guillaume Bouffard: "A Generic Approach for Protecting Java Card TM Smart Card Against Software Attacks A Generic Approach for Protecting Java Card", , 10 octobre 2014 (2014-10-10), XP055253587, Extrait de l'Internet: URL:https://tel.archives-ouvertes.fr/tel-0 1089654/document [extrait le 2016-02-26]

## Description

L'invention concerne un procédé d'exécution d'un code machine d'une fonction sécurisée par un microprocesseur ainsi qu'un code binaire comportant le code machine de cette fonction sécurisée. L'invention concerne également :
- un support d'enregistrement d'informations et un appareil pour la mise en œuvre de ce procédé d'exécution, et
- un compilateur pour générer ce code binaire.

Pour obtenir des informations sur un code binaire ou provoquer un fonctionnement inattendu du code binaire, il est connu de le soumettre à des attaques connues sous le terme d'« injection de fautes » ou « fault attack » en anglais. Ces attaques consistent à perturber le fonctionnement du microprocesseur lors de l'exécution du code machine par divers moyens physiques comme des modifications des tensions d'alimentation, des modifications du signal d'horloge, l'exposition du microprocesseur à des ondes électromagnétiques et autres.

À l'aide de telles perturbations, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Une attaque par injection de fautes peut provoquer notamment trois types de fautes, dites fautes d'exécution, lors de l'exécution du code machine :
1) une altération des instructions du code machine exécuté,
2) une altération des valeurs stockées dans des variables ou des registres, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Lorsque l'altération empêche seulement l'exécution d'une ou plusieurs des instructions du code machine ou lorsque l'altération a un effet sur le processeur équivalent au fait de ne pas exécuter l'instruction perturbée, on parle alors de saut d'instructions. Lorsque l'altération remplace une ou plusieurs des instructions du code machine par d'autres instructions exécutables par le microprocesseur, on parle alors de remplacement d'instructions.

Lorsque l'altération modifie une instruction de branchement, on observe un effet de détournement du flot de contrôle. L'effet de détournement du flot de contrôle peut être observé quand une instruction de branchement est altérée ou quand la condition impliquée dans un branchement conditionnel est modifiée ou quand l'adresse de retour d'une fonction est modifiée ou encore quand le compteur ordinal du microprocesseur est modifié.

Le code machine d'une fonction peut être conçu pour permettre la détection et le signalement des fautes provoquées par l'injection de fautes. Si nécessaire, il est aussi conçu pour déclencher automatiquement l'exécution de contre-mesures en réponse au signalement d'une faute. Lorsque le code machine d'une fonction est ainsi conçu, ce code machine est qualifié de « code machine d'une fonction sécurisée ». En effet, contrairement au code machine d'une fonction non-sécurisée, ce code machine a au moins la capacité de signaler les fautes typiquement rencontrées en cas d'attaque par injection de fautes.

Par exemple, des procédés connus d'exécution d'un code machine d'une fonction sécurisée par un microprocesseur comporte :
a) la fourniture du code machine enregistré dans une mémoire principale à accès aléatoire, ce code machine étant formé par une succession de blocs de base dans lesquels :
   - chaque bloc de base débute à une adresse de branchement et se termine par une instruction de branchement vers une adresse de branchement d'un autre bloc de base,
   - chaque bloc de base est associé à une signature et comporte des instructions à protéger, chaque instruction à protéger étant immédiatement précédée ou suivie d'une instruction de construction de la valeur de la signature associée à ce bloc de base, l'exécution par le microprocesseur de chaque instruction de construction modifiant d'une façon prédéterminée la valeur de la signature de ce bloc de base,
   - chaque bloc de base suivant qui, lors de l'exécution du code machine, est exécuté après un bloc de base précédent, comporte en plus un jeu d'instructions de comparaison qui :
      - déclenche la comparaison de la valeur construite de la signature associée au bloc de base précédent à une valeur attendue de cette signature déterminée lors de la génération du code machine, et
      - seulement si ces valeurs ne correspondent pas, déclenche le signalement d'une faute lors de l'exécution de ce code machine et, dans le cas contraire, inhibe ce signalement,
   - chaque bloc de base est divisé en une succession de mots de N bits chacun, où chacun de ces mots comporte au moins une instruction machine et N est un nombre entier constant, puis
b) le chargement, dans une file, uniquement par mots complets, du ou des instructions du code machine désignées par la valeur actuelle d'un compteur ordinal, puis
c) l'exécution par une unité arithmétique et logique, des instructions chargées dans la file systématiquement dans l'ordre où ces instructions ont été chargées dans cette file.

Par exemple, un tel procédé d'exécution est décrit dans l'article suivant de Monsieur Lalande : J.-F Lalande et Al : « Software countermeasures for control flow integrity of smart card C codes », ESORICS'14, Springer 2014, pp 200-218, 13 septembre 2014.

Dans cet article, les instructions de construction sont des instructions qui, lorsqu'elles sont exécutées par le microprocesseur, incrémentent la valeur d'un compteur. C'est la valeur de ce compteur qui constitue la valeur construite de la signature. Toujours dans cet article, les instructions de construction et le jeu d'instructions de comparaison sont placés dans le code source avant et après une ligne à protéger de ce code source.

Ce procédé présente plusieurs avantages. En particulier, il permet à la fois :
- de détecter un saut d'au moins deux lignes du code source, et
- de détecter une modification de l'intégrité du flot de contrôle.

Le terme « modification de l'intégrité du flot de contrôle » désigne une altération non prévue et non souhaitée du flot de contrôle du code machine.

Par contre, comme expliqué au paragraphe 6.2 de l'article de J-F Lalande, le procédé divulgué dans cet article ne permet pas de détecter des sauts d'instructions avec une granularité plus fine que deux lignes du code source. En particulier, il ne permet pas de détecter le saut d'une seule instruction du code machine.

L'invention vise à remédier à cet inconvénient en proposant un procédé d'exécution d'un code machine d'une fonction sécurisée qui permet de détecter de nombreuses fautes d'exécution et, en particulier un saut d'instructions, avec une granularité beaucoup plus fine que ce qui est possible avec le procédé décrit dans l'article de J-F Lalande, tout en conservant les avantages du procédé décrit dans cet article.

De l'état de la technique est également connu de :
- Werner Mario et Al : « Protecting the Control Flow of Embedded Processors against Fault Attacks », 10/03/2016, Network and parallel computing ; Springer International Publishing ; CHAM ; Pages 161-176 ;
- US2011/078420A1.

À cet effet, l'invention a donc pour objet un procédé d'exécution d'un code machine d'une fonction sécurisée conforme à la revendication 1.

En incorporant dans chaque mot contenant une instruction à protéger, une instruction de construction, il devient possible de détecter la mise en œuvre d'une attaque par injection de fautes, même si une seule instruction est sautée. En effet, il n'est pas possible dans le procédé revendiqué de provoquer un saut, même d'une seule instruction à protéger, sans provoquer l'absence de chargement dans la file du mot complet contenant tout ou partie de cette instruction. Or, l'absence de chargement de ce mot provoque immanquablement l'absence de chargement de l'instruction de construction associée à cette instruction puisqu'elle est située dans le même mot. Ceci permet donc de détecter un plus grand nombre de fautes d'exécution et, notamment, un saut d'une seule instruction du code machine.

Dans l'article de J-F Lalande, l'instruction de construction est associée à chaque ligne à protéger du code source. Lors de la compilation du code source, une ligne à protéger de ce code source peut tout à fait correspondre à un ensemble de plusieurs instructions du code machine. À l'intérieur de cet ensemble, les instructions ne sont donc pas toutes associées à une instruction de construction. Dès lors, si une attaque par injection de fautes provoque le saut d'une des instructions de cet ensemble, cela ne se traduit pas nécessairement par une valeur construite erronée pour la signature. Il n'est donc pas systématiquement possible de détecter une attaque par injection de fautes à l'aide du procédé décrit dans l'article de J-F Lalande. Au contraire, dans le procédé revendiqué, chaque instruction à protéger du code machine de la fonction sécurisée est associée à une instruction de construction. À cause de cela, le procédé revendiqué est plus efficace pour détecter une attaque par injection de fautes.

L'invention a également pour objet un code binaire conforme à la revendication 2.

Les modes de réalisation de ce code binaire peuvent comporter une ou plusieurs de caractéristiques des revendications dépendantes.

Ces modes de réalisation du code binaire peuvent en outre présenter un ou plusieurs des avantages suivants :
- Le fait que la valeur attendue de la signature identifie de façon unique le bloc de base précédent permet de détecter de façon fiable un détournement du flot de contrôle. En effet, si un autre bloc de base que le bloc de base précédent est exécuté immédiatement avant le bloc de base suivant, alors la valeur de la signature de cet autre bloc de base ne correspond pas à la valeur attendue de la signature. Ceci reste vrai même si cet autre bloc comporte exactement le même nombre d'instructions à protéger que le bloc de base précédent. Cela rend donc très difficile de modifier le flot de contrôle du code machine sans que cela soit détecté.
- L'utilisation dans le bloc de base suivant d'une valeur attendue qui correspond à une combinaison de valeurs prévues pour les signatures des différents blocs de base précédents possibles, permet d'obtenir une valeur attendue qui est indépendante du bloc de base précédent réellement exécuté avant d'exécuter ce bloc de base suivant. Cela simplifie donc la mise en œuvre de la comparaison à effectuer lors de l'exécution du bloc de base suivant.
- Lorsque chaque instruction du jeu d'instructions de comparaison est immédiatement précédée ou suivie d'une instruction de construction, il n'est pas possible de neutraliser le signalement d'une faute en essayant, par exemple, de mettre en œuvre un saut des instructions de ce jeu d'instructions de comparaison.

- La prise en compte du contexte d'exécution pour vérifier l'intégrité du flot de contrôle permet de détecter une exécution incorrecte d'une instruction de branchement conditionnel d'un bloc de base précédent. Par exemple, cela permet de signaler un branchement vers un premier bloc de base suivant alors que la condition n'est pas vérifiée ou un branchement vers un second bloc de base suivant alors que la condition est vérifiée. Cela permet donc de détecter et de signaler un plus grand nombre de fautes lors d'une modification de l'intégrité du flot de contrôle.
- Le fait d'utiliser en tant qu'instruction de construction de la signature une instruction d'incrément accélère l'exécution de la fonction sécurisée car les instructions d'incrément sont très rapidement exécutées par un microprocesseur.
- Le fait que chaque instruction de la fonction sécurisée soit traitée comme une instruction à protéger renforce la sécurité du code machine. De plus, cela simplifie la génération du code machine par un compilateur car ce compilateur sait qu'il doit systématiquement insérer avant ou après chaque instruction de la fonction sécurisée une instruction de construction.
- L'utilisation par une fonction non-sécurisée d'une seconde adresse de branchement, située après un jeu d'instructions de validation, pour appeler la fonction sécurisée permet de déclencher l'exécution de cette fonction sécurisée tout en évitant de déclencher un signalement intempestif d'une faute. En effet, dans ce cas, cela permet d'éviter d'exécuter le jeu d'instructions de validation. De plus, en même temps, le fait d'utiliser une première adresse de branchement pour les appels provenant d'autres fonctions sécurisées, permet de rendre plus difficile toute tentative de modification accidentelle du flot de contrôle en agissant sur les appels d'une fonction sécurisée vers une autre fonction sécurisée.
- Employer un identifiant de retour vers une fonction appelante permet de signaler toute tentative de modification de l'intégrité du flot de contrôle lorsque celui-ci revient de la fonction appelée vers la fonction appelante.

L'invention a également pour objet un support d'enregistrement d'informations contenant le code binaire revendiqué.

L'invention a également pour objet un appareil électronique pour la mise en œuvre du procédé revendiqué..

Enfin, l'invention a également pour objet un compilateur apte à transformer automatiquement un code source d'un programme contenant une fonction sécurisée en un code binaire conforme à la revendication 15.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code machine d'une fonction sécurisée ;
- les figures 2 à 5 sont des illustrations schématiques de différentes portions d'un code machine d'une fonction sécurisée susceptible d'être exécutée par l'appareil de la figure 1 ;
- la figure 6 est une illustration schématique d'un compteur mis en œuvre lors de l'exécution du code machine de la fonction sécurisée ;
- la figure 7 est une illustration schématique représentant l'agencement des instructions du code machine susceptible d'être exécuté par l'appareil de la figure 1 ;
- la figure 8 est un organigramme d'un procédé d'exécution du code machine d'une fonction sécurisée ;
- la figure 9 est une illustration schématique de certaines instructions du code machine mises en œuvre pour sécuriser les appels des fonctions entre elles ;
- la figure 10 est une illustration schématique de l'architecture d'un autre mode de réalisation possible d'un appareil électronique apte à exécuter le code machine d'une fonction sécurisée ;
- la figure 11 est une illustration schématique d'un compilateur apte à générer le code machine exécuté par l'appareil de la figure 1 ou 10.

### Notations et définitions :

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant. Dans la suite de cette description, tous ce qui est décrit dans le cas des instructions de branchement explicite s'applique aussi aux instructions de branchement implicites. Dans cette demande, l'expression « instruction de branchement» désigne donc aussi bien une instruction de branchement explicite qu'implicite. Ainsi, l'exécution d'un bloc de base débute systématiquement par l'exécution de l'instruction située à son adresse de branchement et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement » est une instruction qui, lorsqu'elle est exécutée par le microprocesseur, déclenche un saut vers l'adresse de branchement d'un autre bloc de base. Cette instruction de branchement comporte donc au moins l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en langage assembleur pour les microprocesseurs de la série x86. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA » ou « JNE » en assembleur. L'instruction de branchement peut aussi bien être un appel à une fonction. Dans ce texte, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

Une « adresse de branchement » est l'adresse dans la mémoire principale à laquelle se trouve la première instruction exécutée d'un bloc de base. Par la suite, on parle d'adresse de branchement même pour les blocs de base dont la première instruction est exécutée suite à l'exécution d'une instruction de branchement implicite.

On parlera d'exécution d'une fonction pour désigner l'exécution des instructions réalisant cette fonction.

Dans un souci de simplification, dans cette description et dans les figures, ces instructions ne sont pas représentées sous forme binaire, mais plutôt sous une forme symbolique exprimée dans un langage évolué de plus haut niveau.

### Description d'un mode de réalisation :

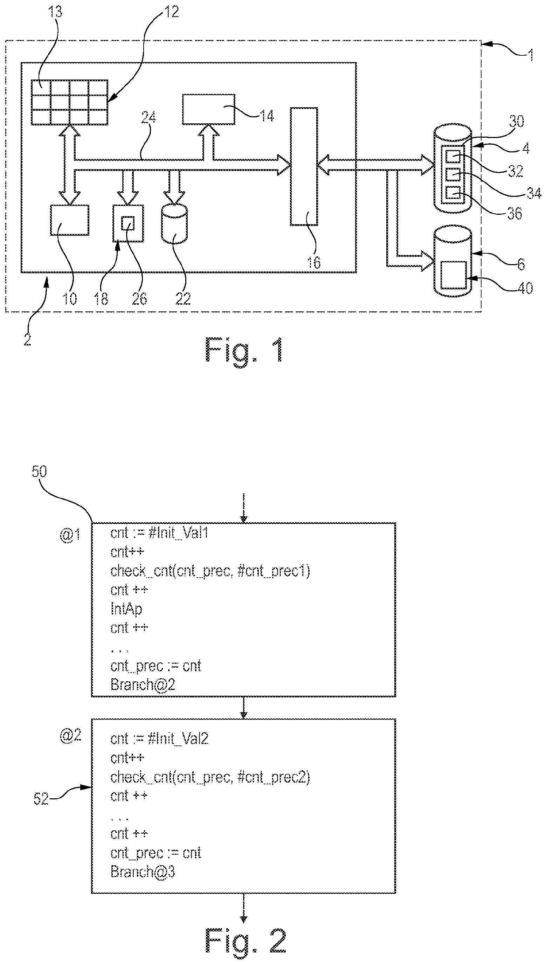

La figure 1 représente un appareil électronique 1 comportant un microprocesseur 2, une mémoire principale 4 et un support 6 d'enregistrement d'informations. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10. Toutefois, en variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

Dans cette exemple de réalisation et à titre d'illustration, le code binaire 30 comporte notamment :
- le code machine 32 d'une première fonction sécurisée,
- le code machine 34 d'une deuxième fonction sécurisée apte à appeler la première fonction, et
- le code machine 36 d'une fonction non-sécurisée apte à appeler la première fonction.

Ici, par « fonction sécurisée » on désigne une fonction qui est codée en langage machine de manière à permettre la détection d'attaque par injection de faute et notamment des sauts d'instructions. A l'inverse, on désigne par « fonction non-sécurisée », une fonction qui est codée en langage machine sans implémenter les techniques qui seront décrites par la suite pour obtenir une fonction sécurisée.

A titre d'illustration, le microprocesseur 2 est conforme à l'architecture ARM (« Advanced Risk Machine ») version 7 et supporte les jeux d'instructions Thumb1 et Thumb2.

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. Le chargeur 18 charge dans la file 22 systématiquement et à chaque fois un mot complet de N bits, où N est un entier constant généralement supérieur ou égale à 8, 16, 32 ou 64. N est donc la taille de chargement utilisée par le microprocesseur 2. Par exemple, ici, N est égal à 32. Les instructions du jeu d'instructions du microprocesseur 2 ont des longueurs variables et, typiquement, inférieures ou égales à N bits. Par exemple, certaines instructions sont codées sur N bits et d'autres sur N/2 bits. Ainsi, lorsque le chargeur 18 charge un mot dans la file 22, il peut :
- cas 1 : charger une seule instruction de 32 bits,
- cas 2 : charger simultanément plusieurs instructions telles que deux instructions de 16 bits chacune,
- cas 3 : charger une ou plusieurs parties d'une ou plusieurs instructions telle qu'une instruction de 32 bits à cheval sur deux mots du code machine.

Dans le cas 3), lorsque l'enregistrement d'un mot dans la file 22 ne permet pas d'enregistrer l'instruction complète, le chargeur 18 doit charger le mot suivant du code machine pour obtenir l'instruction complète. Toutefois, pour faciliter les chargements des instructions dans la file 22 et minimiser le nombre d'occurrences du cas 3), le code 30 est divisé en une succession de mots de N bits et, le plus souvent possible, le début d'un mot correspond au début d'une instruction et la fin de ce mot correspond à la fin d'une instruction. Les instructions sont ainsi alignées sur les frontières des mots.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple depuis la mémoire 4 et/ou le support 6 extérieurs au microprocesseur 2.

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2. Ici, on mentionnera l'existence parmi ces registres dédiés, d'un registre 13 qui contient une valeur qui varie en fonction de la condition d'un branchement conditionnel. Plus précisément, sa valeur n'est pas la même selon que cette condition est vérifiée ou non. Par exemple, ici, ce registre 13 est le registre de statut. Dans une architecture ARM, ce registre 13 est connu sous l'acronyme CPSR (« Current Program Statut Register »). Le CPSR contient notamment les bits suivants :
- le bit N qui prend la valeur « 1 » si le résultat de la condition est négatif et la valeur « 0 » sinon,
- le bit Z qui prend la valeur « 1 » si le résultat de la condition est nul et « 0 » sinon,
- le bit C qui prend la valeur « 1 » si le résultat de la condition a une retenue et sinon la valeur « 0 »,
- le bit V qui prend la valeur « 1 » si le résultat de la condition a débordé et sinon la valeur « 0 ».

Par la suite, la valeur de ces quatre bits N, Z, C et V est collectivement désignée par le terme « valeur NZCV ».

Le microprocesseur 2 comporte ici un bus d'échange de données 24 qui relie les différents composants du microprocesseur 2 entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

Les codes machines 32 et 34 ne réalisent pas les mêmes opérations lorsqu'ils sont exécutés par le microprocesseur 2. Toutefois, ils détectent des fautes d'exécution par la même technique. Par la suite, cette technique est seulement décrite en détail dans le cas du code machine 32 sachant qu'elle est mise en œuvre de façon similaire dans le code machine 34.

Le code machine 32 se compose d'une succession de blocs de base qui doivent être exécutés les uns après les autres. Dans la suite de cette description, on présente :
- Objectif 1) : comment détecter une faute d'exécution à l'intérieur d'un bloc de base, et, en même temps
- Objectif 2) : comment détecter une modification de l'intégrité du flot de contrôle.

La figure 2 représente comment sont atteints les objectifs 1) et 2) dans le cas de deux blocs de base 50 et 52 du code machine 32 qui doivent systématiquement être exécutés l'un après l'autre. Dans l'ordre d'exécution, le bloc de base 50 précède le bloc de base 52. Dans cette figure et les figures suivantes :
- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,
- une flèche en pointillés qui pointe dans le vide depuis un bloc de base représenté indique que le ou les blocs de base suivant ce bloc de base représenté n'ont pas été représentés pour simplifier la figure.

Chaque bloc de base débute par une adresse de branchement et se termine par une instruction de branchement. Sur la figure 2, les symboles « @1 » et « @2 » à côté de la première instruction de chaque bloc de base désignent les adresses de branchement, respectivement, des blocs de base 50 et 52. Le symbole « @3 » désigne l'adresse de branchement d'un autre bloc de base non représenté sur la figure 2.

L'instruction « Branch » suivie d'une adresse de branchement telle que @2 ou @3 est une instruction de branchement inconditionnel vers cette adresse de branchement. Dans les figures suivantes, pour simplifier la représentation des blocs de base, les adresses de branchement et les instructions de branchement des blocs de base n'ont pas systématiquement été représentées.

La première instruction « cnt := #Init_Val1 » et « cnt := #Init_Val2 » respectivement des blocs de base 50 et 52 sont des instructions qui initialisent la valeur d'un compteur « cnt » à une valeur initiale prédéterminée, respectivement, #Init_Val1 et #Init_Val2. Ces valeurs initiales sont des constantes choisies lors de la génération du code machine 32. Une valeur constante est une valeur qui ne peut pas être modifiée lors de l'exécution du code machine 32 sauf accidentellement comme, par exemple, en cas d'injection de fautes. Dans les figures et dans la description, le symbole #Init_Val est utilisé pour désigner de façon générale la valeur initiale d'un compteur d'un bloc de base. Lorsque dans la description ou les figures, il est nécessaire de distinguer différentes valeurs initiales les unes des autres, le symbole #Init_Val est suivi d'un numéro d'ordre qui permet de distinguer les différentes valeurs initiales. Par exemple, sur la figure 2, pour distinguer les deux valeurs initiales des compteurs des blocs 50 et 51, les symboles « #Init_Vat1 » et « #Init_Val2 » sont utilisés.

Ici, la valeur initiale du compteur « cnt » de chaque bloc de base est choisie de manière à ce que la valeur attendue de la signature de ce bloc de base soit unique pour chaque bloc de base du code machine 32. Par « unique pour chaque bloc de base», on désigne le fait que la probabilité que deux blocs de base du code machine 32 aient la même valeur attendue pour leur signature respective est inférieure à 1 chance sur 100 ou sur 1000. En pratique, la probabilité que deux blocs de base aient la même valeur attendue est généralement beaucoup plus petite. Par exemple, de préférence, cette probabilité est inférieure à Nᵥₐ/2^{c-1} ou Nᵥₐ/2^{c}, où N_{Va} est le nombre de valeurs attendues utilisées dans le code machine, « c » est le nombre de bits utilisés pour coder la valeur maximale du compteur « cnt » en binaire. En particulier, l'expression « unique pour chaque bloc de base» couvre donc le cas où les valeurs attendues des signatures de tous les blocs de base sont systématiquement différentes les unes des autres. Ici, lors de la génération du code machine 32, la valeur initiale du compteur « cnt » de chaque bloc de base est obtenue par tirage aléatoire ou pseudo-aléatoire parmi un groupe de nombres cent fois ou mille fois plus grand que le nombres de blocs de base du code machine 32.

L'instruction « cnt++ » est une instruction qui incrémente de 1 la valeur actuelle du compteur « cnt » lorsqu'elle est exécutée par le microprocesseur 2. Cette instruction est utilisée ici pour construire, au fur et à mesure que le microprocesseur 2 exécute un bloc de base, la valeur de la signature associée à ce bloc de base. Pour cette raison, cette instruction « cnt++ » est aussi appelée « instruction de construction de la signature » du bloc de base.

La valeur construite finale de la signature d'un bloc de base est enregistrée, avant le début de l'exécution du bloc de base suivant, dans une variable « cnt_prec ». Cette opération est représentée sur les figures par l'instruction « cnt_prec := cnt ».

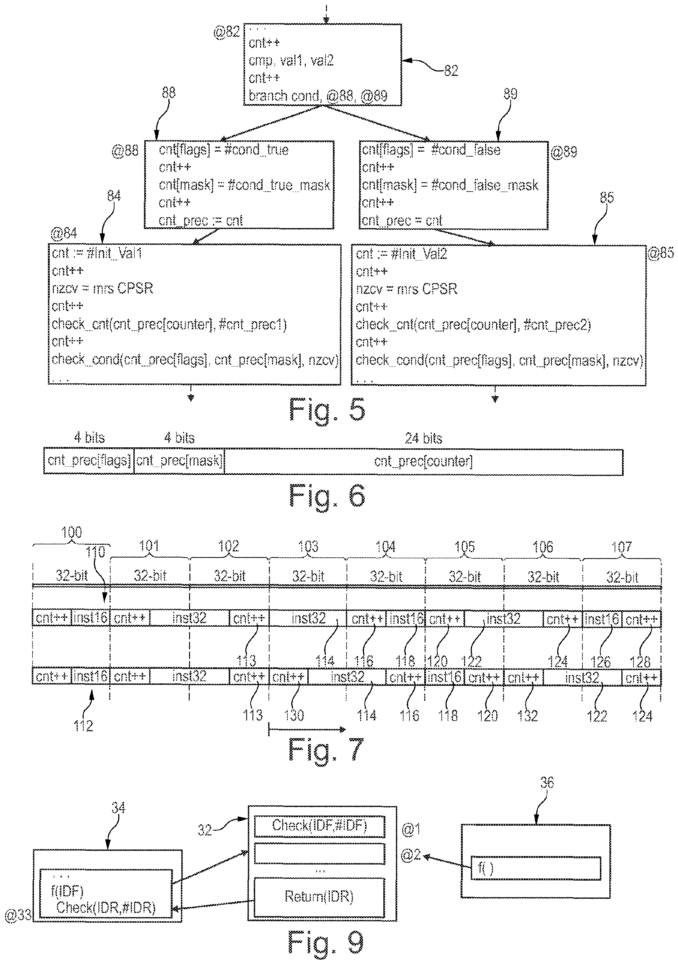

Pour être capable de détecter une faute lors de l'exécution de l'instruction à protéger, chaque instruction à protéger est intimement associée à une instruction respective « cnt++ ». Par « intimement associée », on désigne le fait que l'association entre l'instruction à protéger et l'instruction « cnt++ » est tel que si l'instruction à protéger est chargée dans la file 22, alors l'instruction « cnt++ » qui lui est associée est elle aussi systématiquement chargée en même temps dans la file 22. Pour arriver à cela, chaque instruction « cnt++ » est codée sur strictement moins de N bits. Ici, l'instruction « cnt++ » est codée sur 16 bits. Ensuite, lors de la compilation du code source, à chaque fois que le compilateur rencontre une instruction à protéger, il insère au moins une instruction « cnt++ » soit immédiatement avant soit immédiatement après l'instruction à protéger. Plus précisément, comme cela sera expliqué plus en détail en référence à la figure 7, le compilateur choisit d'insérer des instructions « cnt+ + » de telle sorte qu'il existe systématiquement un mot de N bits qui contient à la fois :
- toute ou partie de l'instruction à protéger, et
- une instruction « cnt++ ».

Ainsi, lorsque le chargeur 18 charge dans la file 22 cette instruction à protéger, comme il ne peut que charger des mots complets, il charge aussi nécessairement l'instruction « cnt++ » qui est associée à cette instruction à protéger. De façon réciproque, si en agissant sur l'exécution du code machine 32, le chargement de l'instruction à protéger est empêché, cet empêchement provoque aussi nécessairement l'absence de chargement d'une instruction « cnt++ » qui lui est associée. Dès lors, comme expliqué par la suite, même le saut d'une seule instruction à protéger du code machine est détecté et déclenche un signalement d'une faute.

Dans la forme symbolique du code machine des blocs de base représenté sur les figures, l'instruction « cnt++ » intimement associée à une instruction à protéger est systématiquement immédiatement placée avant cette instruction à protéger. Toutefois, comme expliqué ci-dessus, en réalité, dans le code machine, cette instruction « cnt++ » peut être située aussi bien immédiatement avant qu'après l'instruction à protéger.

Dans le bloc de base 50, un exemple d'une instruction à protéger est représentée par le symbole « IntAp ». L'instruction IntAp peut être n'importe quelle instruction valable du jeu d'instructions du microprocesseur 2 autre que l'instruction « cnt++ ».

L'instruction « check_cnt(cnt_prec, #cnt_prec1) » est un jeu d'instructions à protéger dont le rôle particulier est expliqué plus loin.

Dans ce mode de réalisation, toutes les instructions de tous les blocs de base du code machine 32 sont considérées comme étant des instructions à protéger. Pour simplifier les figures 2 à 5, la présence de ces autres instructions à protéger dans chaque bloc de base et des instructions « cnt++ » qui leur sont associées sont représentées par le symbole « ... ».

L'instruction « check_cnt(cnt_prec, #cnt_prec1) » est un jeu d'instructions dit de comparaison. Par jeu d'instructions, on désigne aussi bien une seule instruction qu'un groupe de plusieurs inscriptions du langage machine à exécuter les unes après les autres.

Lorsque ce jeu d'instructions de comparaison est exécuté par le microprocesseur 2, la valeur construite cnt_prec pour la signature du bloc de base précédent est comparée à une valeur attendue #cnt_prec1 pour cette signature. La valeur attendue #cnt_prec1 est une constante déterminée lors de la génération, par le compilateur, du code machine 32. Typiquement, lors de la compilation, la valeur attendue #cnt_prec1 est calculée en fonction :
- de la valeur initiale #Init_Val1 affectée au bloc de base précédent, et
- du nombre d'instructions « cnt++ » insérées dans ce bloc de base précédent.

De façon similaire à ce qui a été décrit pour le symbole #Init_Val, dans les figures et dans la description, le symbole #cnt_prec est utilisé pour désigner de façon générale la valeur attendue d'une signature. Lorsque dans la description ou les figures, il est nécessaire de distinguer différentes valeurs attendues les unes des autres, le symbole #cnt_prec est suivi d'un numéro d'ordre qui permet de distinguer les différentes valeurs attendues. Par exemple, sur la figure 2, pour distinguer les deux valeurs attendues pour les signatures des blocs de base précédents, respectivement, les blocs 50 et 51, les symboles « #cnt_prec1 » et « #cnt_prec2 » sont utilisés.

Lors de l'exécution du bloc de base 50, à chaque fois que l'instruction à protéger est exécutée, cela se traduit par une incrémentation de la valeur du compteur « cnt ». À la fin de l'exécution du bloc de base 50, la valeur du compteur « cnt » est sauvegardée dans la variable « cnt_prec ». La variable « cnt_prec » contient donc la valeur construite de la signature pour le bloc de base 50.

Ensuite, lors de l'exécution du bloc de base 52, le microprocesseur 2 compare la valeur construite du bloc de base 50 à la valeur attendue #cnt_prec2. Si aucune instruction à protéger du bloc de base 50 n'a été sautée ou altérée, ces valeurs sont identiques et l'exécution du bloc de base 52 se poursuit. Si une instruction à protéger du bloc de base 50 a été sautée ou altérée, la valeur construite cnt_prec est différente de la valeur attendue #cnt_prec2. Dans ce cas, le microprocesseur 2 signale la présence d'une faute lors de l'exécution du code machine. Le signalement d'une faute est ensuite, par exemple, utilisé pour déclencher automatiquement une ou plusieurs contre-mesures.

Le fait de choisir une valeur initiale #Init_Val pour chaque compteur « cnt » d'un bloc de base qui conduit à une valeur attendue #cnt_prec unique permet aussi de détecter et de signaler une faute si l'intégrité du flot de contrôle est corrompue. Par exemple, dans le cas de la figure 2, le bloc de base 52 doit nécessairement être exécuté immédiatement après le bloc de base 50. Si, suite à une attaque par injection de fautes, l'exécution du bloc de base 52 est déclenchée non pas après l'exécution du bloc de base 50 mais après l'exécution d'un autre bloc de base du code machine 32, cela déclenchera nécessairement un signalement d'une faute. En particulier, ce signalement aura lieu même si cet autre bloc de base comporte exactement le même nombre d'instructions à protéger que le bloc de base 50. En effet, par construction, cet autre bloc de base initialise la valeur du compteur « cnt » à une valeur initiale différente de celle utilisée par le bloc de base 50. Par conséquent, la valeur construite de la signature de cet autre bloc de base sera très certainement différente de la valeur #cnt_prec attendue par le bloc de base 52. Ainsi, le code machine 32 permet à la fois de détecter des fautes d'exécution à l'intérieur d'un bloc de base et, en même temps, de détecter des modifications de l'intégrité du flot de contrôle.

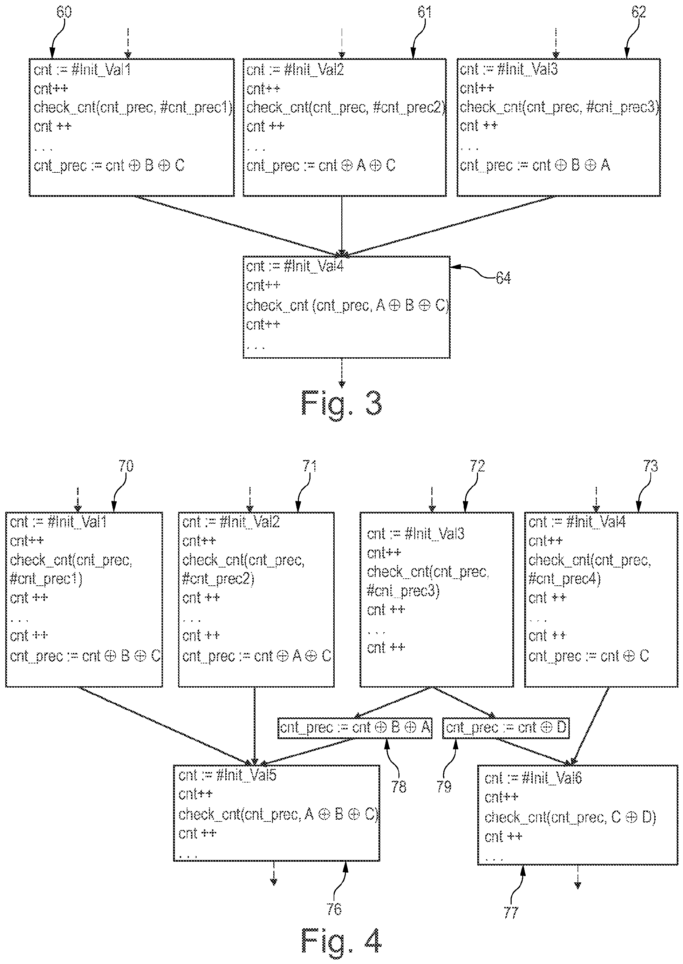

La figure 3 représente comment les signatures de plusieurs blocs de base précédents sont construites lorsque, quel que soit le bloc de base précédent exécuté, le bloc de base suivant est systématiquement le même. La solution est ici illustrée dans le cas particulier de trois blocs de base précédents 60 à 62 et d'un bloc de base suivant 64. Toutefois, l'implémentation décrite ici se généralise sans aucune difficulté à un nombre quelconque de blocs de base précédents.

Avant d'exécuter le bloc de base 64, un seul des blocs de base 60 à 62 est exécuté. Le choix du bloc 60 à 62 qui sera exécuté dépend typiquement du contexte d'exécution de la fonction sécurisée, c'est-à-dire des données qui sont traitées par le code machine 32. Ces données traitées sont susceptibles de varier d'une exécution à une autre du code machine 32.

Dans la figure 3 et les suivantes, la description des symboles et des instructions déjà données en regard d'une figure précédente est omise.

Dans le cas de la figure 3, si la signature des blocs de base 60 à 62 était construite comme décrit dans le cas de la figure 2, alors les valeurs construites pour les signatures des blocs de base 60 à 62 seraient toutes différentes. Cela complexifie alors sérieusement l'implémentation du jeu d'instructions de comparaison du bloc de base 64 puisqu'il faut alors tester toutes les valeurs attendues des signatures des blocs de base précédents.

Sur la figure 3, le jeu d'instructions de comparaison du bloc de base 64 est représenté par le symbole « check_cnt(cnt_prec, A ⊕ B ⊕ C) ». Pour que le jeu d'instructions « check_cnt(cnt_prec, A ⊕ B ⊕ C) soit aussi simple que celui de la figure 2, la valeur construite cnt_prec de la signature de chacun des blocs de base 60 à 62 est construite en combinant la valeur du compteur « cnt » à des valeurs prévues A, B et C pour les signatures des autres blocs de base précédents. La valeur prévue d'un bloc de base est la valeur obtenue après l'exécution, par le microprocesseur 2, de chacune des instructions « cnt++ » contenues dans ce bloc de base. Pour cela, un jeu d'instructions combinatoire est placé à l'intérieur de chaque bloc de base 60 à 62. La combinaison consiste ici à réaliser un « ou exclusif » ou XOR entre la valeur actuelle du compteur « cnt » et les valeurs prévues pour les signatures des autres blocs de base précédents.

Sur la figure 3 et dans ce texte :
- l'opération « ou exclusif » est représentée par le symbole ⊕,
- les valeurs prévues pour les blocs de base 60 à 62 sont désignées, respectivement, par les symboles A, B et C.

Sur la figure 3 et les suivantes, les instructions de branchement inconditionnel ne sont pas représentées.

Avec ces notations, les jeux d'instructions combinatoire pour obtenir la valeur finale cnt_prec construite pour les signatures des blocs de base 60 à 62 sont, respectivement :
- « cnt_prec := cnt ⊕ B ⊕ C »,
- « cnt_prec := cnt ⊕ A ⊕ C »,
- « cnt_prec := cnt ⊕ B ⊕ A ».

Ces jeux d'instructions combinatoires sont représentés sur la figure 3 à la fin de chacun des blocs de base 60 à 62.

En construisant ainsi la valeur de la signature des blocs de base 60 à 62, lorsque aucune instruction de ce bloc de base n'est sautée ou altérée, la valeur construite de la signature est la même quel que soit le bloc de base précédemment exécuté. Dès lors, le jeu d'instructions de comparaison « check_cnt(cnt_prec, A ⊕ B ⊕ C) est le même que celui décrit en référence à la figure 2, sauf que la valeur attendue #cnt_prec de la signature est égale à la combinaison par un ou exclusif des valeurs prévues A, B et C. Sur la figure 3, la valeur attendue #cnt_prec est notée « A ⊕ B ⊕ C ». Cela permet de détecter toute modification d'au moins un bit de la signature de l'un quelconque des blocs de base 60 à 62.

La figure 4 représente comment les signatures de plusieurs blocs de base précédents sont construites lorsqu'il existe aussi plusieurs blocs de base suivants différents susceptibles d'être chacun exécutés immédiatement après l'un de ces blocs de base précédents. Cette situation est illustrée sur la figure 4 dans le cas particulier de quatre blocs de base précédents 70 à 73 et de deux blocs de base suivants 76 à 77. Les blocs de base 70 et 71 précèdent uniquement le bloc de base 76. Le bloc de base 73 précède uniquement le bloc de base 77. L'exécution du bloc de base 72 peut être suivie par l'exécution du bloc de base 76 et, en alternance, du bloc de base 77.

Les valeurs prévues pour les signatures des blocs de base 70 à 73 sont notées, respectivement, A, B, C et D. En application de ce qui a été décrit dans le cas de la figure 3, les valeurs attendues par les blocs de base 76 et 77 sont, respectivement, A ⊕ B ⊕ C et C ⊕ D.

La valeur construite cnt_prec pour la signature des blocs de base 70, 71 et 73 est construite comme décrit dans le cas de la figure 3. Par contre, la valeur construite pour la signature du bloc de base 72 ne peut pas être construite comme enseigné dans le cas de la figure 3. En effet, en absence de saut ou d'altération d'instruction, la valeur construite de la signature du bloc de base 72 doit :
- être égale à cnt ⊕ B ⊕ C si l'exécution se poursuit par l'exécution du bloc de base 76, et
- être égale à cnt ⊕ D si l'exécution se poursuit par l'exécution du bloc de base 77.

Pour remédier à cette difficulté, lors de la génération du code machine, le compilateur introduit automatiquement dans le code machine 32, deux blocs de base intermédiaires 78 et 79 supplémentaires et modifie le branchement conditionnel qui se trouve à la fin du bloc de base 72.

Plus précisément, dans le branchement conditionnel qui se trouve à la fin du bloc de base 72, les adresses de branchement des blocs de base 76 et 77 sont remplacées, respectivement, par les adresses de branchement des blocs de base 78 et 79.

Le bloc de base 78 comprend l'instruction « cnt_prec := cnt ⊕ B ⊕ A » qui construit la valeur de la signature du bloc 72 lorsque l'exécution se poursuit par celle du bloc de base 76. La fin du bloc de base 78 comporte une instruction de branchement inconditionnel vers l'adresse de branchement du bloc de base 76.

De façon similaire, le bloc de base 79 comporte l'instruction « cnt_prec := cnt ⊕ D » qui construit la valeur de la signature du bloc de base 72 lorsque l'exécution se poursuit par celle du bloc de base 77. La fin du bloc de base 79 comporte une instruction de branchement inconditionnel vers l'adresse de branchement du bloc de base 77.

De préférence, les instructions des blocs de base 78 et 79 sont protégées. Par exemple, les deux instructions « cnt_prec := cnt ⊕ B ⊕ A » et « cnt_prec := cnt ⊕ D » sont chacune intimement associées à une instruction qui incrémente la valeur du cnt_prec.

La figure 5 représente un cas similaire à celui de la figure 4 modifié pour tenir compte du contexte d'exécution actuel de la fonction sécurisée. En effet, dans le cas de la figure 4, la solution décrite permet de vérifier que le bloc de base 72 est effectivement un bloc de base précédent les blocs de base 76 et 77. Toutefois, la solution décrite ne permet pas de signaler une faute en cas d'exécution d'un branchement vers le bloc de base 76 alors que, dans le contexte d'exécution actuel, c'est un branchement vers le bloc de base 77 qui aurait normalement dû être exécuté. L'implémentation décrite dans la figure 5 permet de signaler une telle faute d'exécution. En effet, lors de la vérification de la validité du branchement conditionnel vers un bloc de base suivant le contexte actuel d'exécution est pris en compte.

L'implémentation de la figure 5 est décrite dans le cas particulier d'un bloc de base précédent 82 qui est suivi de deux blocs de base suivants 84 et 85. Le bloc de base 82 comporte une instruction de branchement conditionnel « branch cond, @88, @89 ». Lorsqu'elle est exécutée, si la condition « cond » est vérifiée, l'exécution se poursuit seulement par l'exécution du bloc de base 84. Dans le cas contraire, l'exécution est seulement dirigée vers le bloc de base 85. Sur cette figure, le symbole @X désigne l'adresse de branchement du bloc de base portant la référence numérique X.

La figure 5 comporte aussi deux blocs de base supplémentaires 88 et 89. Lors de la génération du code machine 32, ces blocs de base 88 et 89 sont automatiquement insérés entre le bloc 82 et, respectivement, les blocs 84 et 85. Pour cela, le branchement conditionnel à la fin du bloc 82 est remplacé par le branchement conditionnel « branch cond, @88, @89 » qui dirige directement l'exécution vers l'adresse @88 si la condition « cond » est vérifiée et, sinon, vers l'adresse @89.

Le bloc de base 88 mémorise la valeur NZCV attendue lorsque la condition « cond » est vérifiée. La valeur NZCV attendue est une constante déterminée lors de la génération du code machine 32. Ici, ce rôle est rempli par les instructions « cnt[flags] := #cond_true » et « cnt[mask] := #cond_true_mask », où #cond_true et #cond_true_mask sont des constantes dont les valeurs ont été déterminées lors de la génération du code machine 32. Plus précisément, lorsqu'elle est exécutée par le microprocesseur 2, l'instruction « cnt[flags] := #cond_true » enregistre la valeur NZCV attendue lorsque la condition « cond » est vérifiée.

Toutefois, selon la condition à vérifier, seule une partie des bits de la valeur NZCV est utile et les valeurs des autres bits doivent être ignorées. Pour cela, un masque identifiant la position des bits utiles est également mémorisé. Ce masque, comme la valeur NZCV attendue, est déterminé lors de la génération du code machine 32. Ici, cette opération de mémorisation est représentée par l'instruction « cnt[mask] := #cond_true_mask » sur la figure 5.

Ici, les instructions « cnt[flags]:= #cond_true » et « cnt[mask] ::=#cond_true_mask » sont traitées comme des instructions à protéger. Ainsi, elles sont chacune associées à une instruction « cnt++ ».

De plus, dans ce cas particulier d'implémentation, l'instruction « cnt_prec := cnt » se trouve à la fin du bloc de base 88 et non pas à la fin du bloc de base 82. Ainsi, la valeur construite de la signature du bloc de base 82 tient également compte des instructions « cnt[flags] := #cond_true » et « cnt[mask] := #cond_true_mask ».

Le bloc de base 88 se termine par une instruction de branchement inconditionnel vers l'adresse @84.

Le bloc de base 89 est identique au bloc de base 88 sauf que :
- les instructions « cnt[flags] := #cond_true » et « cnt[mask] := #cond_true_mask » sont remplacées, respectivement, par des instructions « cnt[flags] := #cond_false » et « cnt[mask] := #cond_false_mask », et
- dans l'instruction de branchement inconditionnel, l'adresse @84 est remplacée par l'adresse @85.

Les instructions « cnt[flags] := #cond_false » et « cnt[mask] := #cond_false_mask » mémorisent, lorsqu'elles sont exécutées par le microprocesseur 2, dans le même espace mémoire, respectivement, la valeur NZCV attendue lorsque la condition « cond » n'est pas vérifiée et la valeur du masque qui sélectionne les bits utiles de la valeur NZCV attendue.

Dans ce mode de réalisation, comme représenté sur la figure 6, la valeur attendue NZCV, le masque et la valeur de la variable cnt_prec sont mémorisés dans un même registre de N bits de l'ensemble 12. Par exemple, la valeur de la variable cnt_prec occupe les 24 bits de poids les plus faibles, la valeur NZCV attendue est mémorisée dans les 4 bits de poids les plus forts et la valeur du masque est mémorisée dans les 4 bits de poids intermédiaires. La plage de 24 bits et les plages de 4 bits correspondant aux valeurs de la variable cnt_prec, de la valeur NZCV et au masque sont désignées, sur la figure 6, respectivement, par les symboles « cnt_prec[flags] », « cnt_prec[mask] » et « cnt_prec[counter] ».

Les blocs de base 84 et 85 comprennent chacun :
- une instruction « nzcv := mrs CPSR » qui charge la valeur NZCV actuellement contenue dans le registre CPSR dans une variable nzcv,
- un premier jeu d'instructions de comparaison « check_cnt(cnt_prec[counter], #cnt_prec) », et
- un second jeu d'instructions de comparaison « check_cond(cnt_prec[flags], cnt_prec[mask], nzcv) ».

Lorsqu'il est exécuté par le microprocesseur 2, le premier jeu d'instructions de comparaison compare la valeur construite cnt_prec[counter] pour la signature du bloc de base précédent à la valeur attendue #cnt_prec établie lors de la génération du code machine 32. Seulement si les valeurs ne correspondent pas, alors une faute dans l'exécution du code machine 32 est signalée. Dans le cas contraire, aucune faute n'est signalée.

Lorsqu'il est exécuté par le microprocesseur 2, le second jeu d'instructions de comparaison compare les valeurs des bits utiles de la variable nzcv aux valeurs attendues pour ces mêmes bits. Seulement si les valeurs ne correspondent pas, alors une faute dans l'exécution du code machine est signalée. Dans le cas contraire, aucune faute n'est signalée. Pour cette comparaison, seuls les bits sélectionnés à l'aide du masque mémorisé dans la plage cnt_prec[mask] sont utilisés. La valeur nczv attendue est la valeur mémorisée dans la plage cnt_prec[flags].

Lorsque le code machine 32 s'exécute normalement, si la condition « cond » n'est pas vérifiée, alors l'exécution du code machine 32 doit se poursuivre par l'exécution du bloc de base 89. Toutefois, à cause d'une attaque par injection de faute au moment de l'exécution du branchement conditionnel, dans ce contexte d'exécution, il peut arriver que l'exécution se poursuive accidentellement par l'exécution du bloc de base 88 au lieu du bloc de base 89. Dans ce cas, la valeur nzcv attendue correspond au cas où la condition « cond » est vérifiée alors que la valeur de la variable nzcv correspond au cas où la condition « cond » n'est pas vérifiée. Cette contradiction est détectée lors de l'exécution du second jeu d'instructions de comparaison et une faute est signalée. Ainsi, le contexte d'exécution est pris en compte pour détecter une modification de l'intégrité du flot de contrôle.

La figure 7 représente l'agencement des instructions du code machine 32 mis en œuvre pour associer intimement les instructions à protéger aux instructions « cnt+ + ».

Les lignes verticales en pointillés représentent la division du code machine 32 en une succession de mots de N bits chacun. On rappelle qu'ici que N est la taille de chargement. Dans cet exemple, la taille de chargement est égale à 32 bits. Sur la figure 7, seuls huit mots 100 à 107 du code machine 32 sont représentés. Sur la figure 7, les notations suivantes sont utilisées :
- « cnt++ » désigne les 16 bits qui codent l'instruction « cnt++ »,
- « intr16 » désigne les 16 bits qui codent une instruction à protéger codée sur 16 bits,
- « inst32 » désigne les 32 bits qui codent une instruction à protéger codée sur 32 bits.

Comme indiqué précédemment, le code machine 32 contient aussi bien des instructions à protéger codées sur 16 bits que sur 32 bits.

Une barre horizontale 110 représente un premier agencement des instructions d'un code machine où l'association entre chaque instruction à protéger et l'instruction « cnt++ » est réalisée en insérant systématiquement l'instruction « cnt+ + » immédiatement avant l'instruction à protéger à laquelle elle doit être associée. Sur cette figure, l'ordre d'exécution du code machine est représenté par une flèche horizontale allant de la gauche vers la droite. Par la suite, les termes « avant » et « après » sont définis par rapport à l'ordre d'exécution du code machine.

Dans le cas de l'agencement 110, chaque instruction à protéger n'est pas systématiquement intimement associée à une instruction « cnt++ ». En effet, il peut exister des mots qui contiennent uniquement une instruction à protéger. Sur la figure 7, ceci est illustré dans le cas de l'instruction 114 contenue à l'intérieur du mot 103. L'instruction 114 est associée à l'instruction « cnt++ » 113 contenue à l'intérieur du mot précédent 102. Si une attaque provoque seulement le saut du mot 103, cela n'empêche pas le chargement du mot 102. L'instruction « cnt++ » 113 est donc exécutée et la valeur construite de la signature est identique à la valeur attendue. Le saut de l'instruction 114 n'est donc pas détecté.

Une barre horizontale 112 représente un second agencement des instructions, mis en œuvre dans le code machine 32, qui permet d'associer intimement systématiquement chaque instruction à protéger à une instruction « cnt+ + ». Pour cela, lors de la génération du code machine 32 par un compilateur, ce compilateur, par défaut, insère l'instruction « cnt++ » immédiatement avant l'instruction à protéger sauf si cela conduit à générer un mot qui contient uniquement des bits de l'instruction à protéger. Dans ce dernier cas, le compilateur insère automatiquement une instruction « cnt++ » supplémentaire immédiatement avant cette instruction à protéger pour décaler cette instruction à protéger de 16 bits. En faisant cela, chaque mot du code machine 32 contenant des bits d'une instruction à protéger comporte aussi nécessairement les bits codant l'instruction « cnt++ ». Dans l'exemple représenté sur la figure 7, les barres 110 et 112 sont identiques jusqu'au mot 103. Au niveau du mot 103, placer une seule instruction « cnt++ » 113 immédiatement avant l'instruction 114 conduit à obtenir un mot 103 contenant uniquement les 32 bits de l'instruction 114. Pour éviter cela, automatiquement, le compilateur insère une deuxième instruction « cnt++ » 130 supplémentaire immédiatement avant l'instruction 114. Ensuite, pour éviter que le mot 106 contienne uniquement les bits codant l'instruction à protéger 122, le compilateur insère automatiquement une instruction « cnt++ » supplémentaire 132 immédiatement avant cette instruction 122.

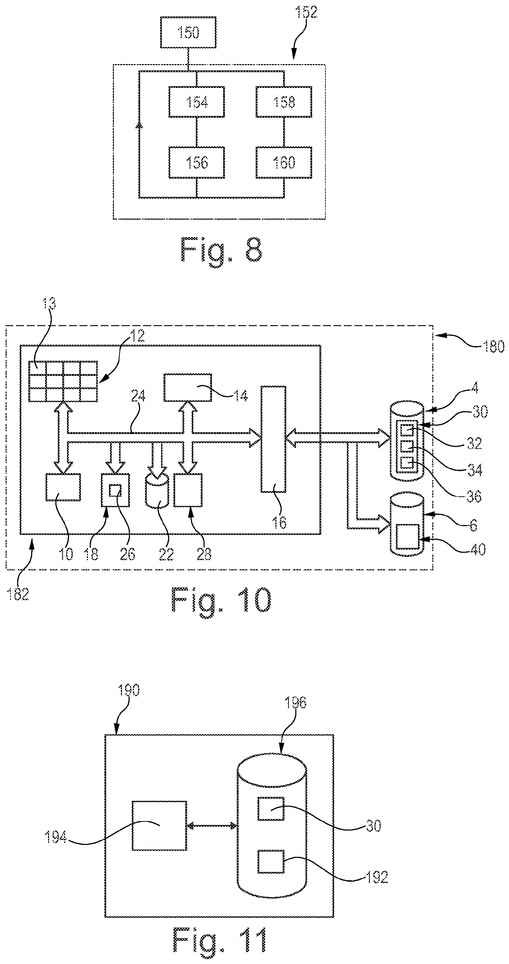

La figure 8 représente un procédé d'exécution du code binaire 30 par le microprocesseur 2.

Le procédé débute par une étape 152 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4.

Ensuite, lors d'une étape 152, le microprocesseur 2 exécute le code binaire 30 et, en particulier, le code machine 32. Pour cela, le chargeur 18 charge, lors d'une opération 154, les instructions à exécuter les unes après les autres dans la file 22.

Ensuite, lors d'une opération 156, l'unité arithmétique et logique 10 exécute chacune des instructions chargées dans la file 22 dans l'ordre où elles ont été chargées.

Lors de ce chargement, le chargeur 18 charge uniquement des mots complets. Ainsi, une instruction à protéger ou une partie d'instruction à protéger ne peut pas être chargée dans la file 22 sans en même temps charger l'instruction « cnt+ + » qui lui est associée. Grâce à cela, l'exécution d'une instruction à protéger ne peut pas être facilement altérée sans entraîner en même temps l'altération d'une instruction « cnt++ ». Il est donc possible, grâce à l'agencement des instructions du code machine 32 décrit en regard de la figure 7, de détecter des fautes aussi petites qu'une faute sur une seule instruction machine à protéger.

Lors de l'exécution du code machine 32, si des attaques conduisent à altérer une instruction à protéger ou à modifier le flot de contrôle, le microprocesseur 2 signale, lors d'une opération 158, une faute dans l'exécution du code machine 32.

En réponse à un tel signalement, lors d'une opération 160, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

La figure 9 représente les interactions entre les codes machines 32, 34 et 36. L'implémentation décrite ici permet de sécuriser les appels entre fonctions sécurisées. En effet, un appel à une fonction sécurisée correspond à l'exécution d'une instruction de branchement vers une adresse de branchement d'un bloc de base de la fonction sécurisée appelée. Pour illustrer ceci, sur la figure 9, l'instruction de branchement du code machine 34 qui appelle le code machine 32 est représentée par l'instruction « f(IDF) ». L'adresse de branchement à laquelle renvoie l'instruction « f(IDF) » est notée @1 sur la figure 9.

À la fin de l'exécution du code machine 32, l'exécution d'une instruction de branchement redirige le flot de contrôle vers une adresse @3 du code machine 34. Puis, l'exécution du code machine 34 se poursuit. Cette instruction de branchement est notée « return(IDR) » sur la figure 9. Pour sécuriser l'appel au code machine 32, lors de cet appel, le code machine 34 transmet un identifiant IDF au code machine 32. Ensuite, l'exécution du code machine 32 débute par la vérification que la valeur transmise de l'identifiant IDF correspond bien à une valeur attendue #IDF. La valeur #IDF est une constante déterminée lors de la génération du code machine 32. Seulement si les valeurs transmises et attendues ne correspondent pas, alors le microprocesseur 2 déclenche le signalement d'une faute dans l'exécution du code machine 32. Dans le cas contraire, c'est-à-dire si ces valeurs correspondent, alors l'exécution du code machine 32 se poursuit sans déclencher ce signalement d'une faute.

Sur la figure 9, le jeu d'instructions de validation qui réalise cette opération, lorsqu'il est exécuté par le microprocesseur 2, est noté « check(IDF, #IDF) ». Cette implémentation permet de déclencher le signalement d'une faute si, suite à une attaque par injection de fautes, le flot de contrôle est modifié et redirigé vers l'adresse @1 sans que l'instruction f(IDF) ait été exécutée au préalable. En effet, dans ce cas, aucun identifiant IDF n'est transmis au code machine 32 ou alors la valeur de l'identifiant IDF transmise est erronée.

De façon similaire, à la fin de l'exécution du code machine 32, l'instruction « Return(IDR) transmet un identifiant IDR au code machine 34 en même temps qu'elle redirige l'exécution du code machine vers l'adresse @33. Puis, le code machine 34 vérifie si la valeur transmise de l'identifiant IDR correspond à une valeur attendue #IDR de cet identifiant. Cette vérification conduit au déclenchement du signalement d'une faute seulement si les valeurs transmise et attendue pour l'identifiant IDR ne correspondent pas. La valeur attendue #IDR est construite lors de la génération du code machine 34. Dans la figure 9, le jeu d'instructions du code machine 34 qui réalise cette vérification est noté « check(IDR, #IDR) ».

Dans ce mode de réalisation, le code machine 32 peut aussi être légitimement appelée par le code machine 36. Contrairement au code machine d'une fonction sécurisée, le code machine 36 ne peut pas transmettre l'identifiant IDF lors de l'exécution d'un branchement vers le code machine 32. Par exemple, le code machine 36 a été généré par un tiers indépendamment du code machine 32. Dès lors, pour éviter qu'une faute soit signalée à chaque fois que le code machine 36 appelle le code machine 32, le code machine 32 comporte deux points d'entrée différents. Le premier point d'entrée correspond à l'adresse de branchement @1. Ce premier point d'entrée est systématiquement utilisé pour appeler le code machine 32 à partir du code machine d'une fonction sécurisée. Lorsque le premier point d'entrée est utilisé, le jeu d'instructions « check(IDF, #IDF) » est exécuté. Pour cela, l'adresse @1 est située avant ou au début du jeu d'instructions « check(IDF, #IDF) ».

Le deuxième point d'entrée correspond à une adresse de branchement @2 qui se situe juste après le jeu d'instructions « check(IDF, #IDF) ». Le second point d'entrée est systématiquement utilisé pour appeler le code machine 32 à partir du code machine d'une fonction non-sécurisée. Lorsque le second point d'entrée est utilisé, le jeu d'instructions « check(IDF, #IDF) » n'est pas exécuté de sorte que l'appel du code machine 32 par le code machine 36 ne déclenche pas le signalement d'une faute.

Le fait que lors du retour de l'exécution du code machine 32 vers le code machine 36, l'identifiant IDR soit transmis au code machine 36 ne perturbe en rien son fonctionnement. En effet, le code machine 36 est dépourvu d'instruction « check(IDR, #IDR) ». Pour ce faire, on veillera par exemple à ce que la valeur attendue IDR soit stockée dans un registre typiquement appelé «caller saved», ou «scratch register», c'est-à-dire un registre pouvant être librement utilisé dans le code appelé (code machine 32) et dont la valeur n'a pas besoin d'être préservée lors du retour dans le code appelant 36 après l'exécution du code 32.

Typiquement, chaque instruction des jeux d'instructions « f(IDF) », « check(IDF, #IDF) », « return(IDR) » et « check(IDR, #IDR) » est traitée, lors de la génération des codes machines 32, 34, comme des instructions à protéger de sorte qu'il est difficile, voire impossible, de les altérer sans déclencher le signalement d'une faute.

La figure 10 représente un appareil 180 identique à l'appareil 1 sauf que le microprocesseur 2 est remplacé par un microprocesseur 182. Le microprocesseur 182 est identique au microprocesseur 2 sauf qu'il comporte en plus un module matériel 28 de sécurisation. Le module 28 est capable d'exécuter automatiquement les opérations suivantes à la place de l'unité arithmétique et logique 10 :
1) en réponse au chargement, par le chargeur 18, de l'instruction « cnt++ », le module 28 modifie d'une façon prédéterminée la valeur du compteur « cnt »,
2) en réponse au chargement, par le chargeur 18, d'une instruction « check(cnt_prec, #cnt_prec) », le module 28 compare la valeur construite cnt_prec à la valeur attendue #cnt_prec et si ces valeurs ne sont pas identiques, déclenche le signalement d'une faute, et
3) en réponse au chargement, par le chargeur 18, d'une instruction « cnt := Init_Val », le module 28 initialise la valeur du compteur « cnt » à la valeur « Init_Val ».
Ainsi, dans ce mode de réalisation, les opérations de construction de la valeur de la signature d'un bloc de base et de vérification de cette signature ne sont pas réalisées par l'unité arithmétique et logique 10 mais par le module 28. Grâce à cela, chaque jeu d'instruction « check(cnt_prec, #cnt_prec) » peut correspondre à une seule instruction dans le code machine qui, lorsqu'elle est chargée par le chargeur 18, déclenche la vérification de la signature du bloc de base précédent par le module 28. Cela permet d'accélérer l'exécution de la fonction sécurisée et limite la taille en mémoire du code machine de cette fonction sécurisée.

La figure 11 représente un compilateur 190 apte à générer automatiquement le code machine 32 à partir d'un code source 192. À cet effet, le compilateur 190 comporte typiquement un microprocesseur 194 programmable et une mémoire 196. La mémoire 196 contient les instructions et les données nécessaires pour, lorsqu'elles sont exécutées par le microprocesseur 194, générer automatiquement le code machine 32 à partir d'un code source 192. En particulier, lors de la compilation du code source 192, le microprocesseur 194 introduit automatiquement les instructions « cnt++ », « cnt := #Init_Val » et « check_cnt(cnt_prec, #cnt_prec) » dans le code machine 32. De plus, le microprocesseur 194 agence automatiquement les instructions « cnt++ » du code machine généré comme décrit en référence à la figure 7. La conception et la réalisation d'un tel compilateur sont à la portée de l'homme du métier à partir des explications données dans cette description.

### Variantes du code binaire :

Pour construire la signature d'un bloc de base lors de son exécution, l'instruction de construction n'est pas nécessairement et systématiquement une instruction d'incrément d'un pas prédéterminé. En fait, l'instruction de construction peut être toute instruction, codée sur moins d'un mot et exécutable par le microprocesseur 2 ou le module 28, qui permet, à chaque fois qu'elle est exécutée, de modifier de façon prédéterminée la valeur de la signature. Par exemple, dans une première variante, une instruction « cnt++ » sur deux est remplacée par une instruction de décrément d'un pas prédéterminé. De préférence, les pas d'incrément et de décrément sont alors différents. L'instruction « cnt++ » peut aussi être systématiquement remplacée par une instruction de décrément ou une instruction qui exécute une opération de l'arithmétique modulaire comme une multiplication, une addition ou une division. Dans une autre variante, l'instruction « cnt++ » déclenche, à chaque fois qu'elle est exécutée, la génération, par un générateur de nombres pseudo-aléatoires, d'un nouveau nombre pseudo-aléatoire qui est alors enregistré dans le compteur « cnt » à la place de sa précédente valeur. De plus, l'instruction « cnt := #Init_Val » déclenche, lorsqu'elle est exécutée, l'initialisation de ce générateur de nombres pseudo-aléatoires avec la valeur initiale prédéterminée #Init_Val.

Il est possible de garantir l'unicité de la valeur attendue pour chaque bloc de base par d'autres moyens qu'un simple tirage aléatoire. Par exemple, lors de la génération du code machine, la valeur attendue de la signature de chaque bloc de base est établie en fonction des valeurs attendues déjà utilisées pour d'autres blocs de base. Pour cela, à titre d'illustration, lors de la génération du code machine les opérations suivantes sont exécutées dans l'ordre :
a) La valeur attendue pour le bloc de base actuellement traité est d'abord construite en tirant aléatoirement la valeur initiale du compteur « cnt » comme précédemment décrit.
b) La valeur attendue de la signature du bloc de base actuellement traité est calculée puis comparée aux valeurs attendues construites et mémorisées pour les blocs de base déjà traités.
c) Si la valeur attendue du bloc de base actuellement traité est égale à l'une des valeurs attendues déjà construites et mémorisées, les opérations a) à c) sont réitérées. Dans le cas contraire, la valeur attendue construite pour ce bloc de base actuellement traité est mémorisée.

Dans une variante simplifiée, l'instruction « cnt := #Init_Val » initialise systématiquement la valeur initiale du compteur « cnt » à la même valeur et cela quel que soit le bloc de base à l'intérieur duquel elle se situe. Il suffit alors que les blocs de base ne comportent pas toujours le même nombre d'instructions à protéger pour que les valeurs attendues des signatures de différents blocs de base soient différentes. Dès lors, cela permet toujours de signaler un grand nombre de modifications de l'intégrité du flot de contrôle.

Le jeu d'instructions de comparaison de la valeur construite et de la valeur attendue pour une signature peut être placée n'importe où dans le bloc de base suivant et pas nécessairement au début du bloc de base suivant.

Chaque instruction de chaque bloc de base différente de l'instruction « cnt+ + » n'est pas nécessairement une instruction à protéger. En effet, il arrive que l'exécution de certaines instructions, dites « non-critiques », d'un bloc de base puisse être altérée sans que cela remette en cause la sécurité de la fonction sécurisée. Dans ce cas, il n'est pas nécessaire d'associer à ces instructions non-critiques une instruction « cnt++ ».

Le jeu d'instructions combinatoire peut être placé n'importe où à l'intérieur du bloc de base. En particulier, il n'est pas nécessaire qu'il soit placé à la fin ou après la dernière instruction à protéger du bloc de base précédent.

Une autre solution pour traiter le cas de la figure 3, consiste :
- à remplacer les instructions « cnt_prec := cnt ⊕ B ⊕ C », - « cnt_prec := cnt ⊕ A ⊕ C » e t- « cnt_prec := cnt ⊕ B ⊕ A » chacune par l'instruction « cnt_prec := cnt », et
- à remplacer le jeu d'instructions de comparaison « check_cnt(cnt_prec, A ⊕ B ⊕ C) » par le jeu d'instructions de comparaison : « If [(cnt_prec !=A) AND (cnt_prec != B) AND (cnt_prec != C)] then « Déclencher le signalement d'une faute d'exécution». Autrement dit, dans cette variante, lors de l'exécution du bloc de base 64, il est vérifié si la valeur cnt_prec est différente de chacune des valeurs attendues A, B et C. Dans l'affirmative, une faute d'exécution est signalée. Dans le cas contraire, aucune faute d'exécution n'est signalée.

Dans le cas des figures 3 et 4, la combinaison de la valeur construite de la signature avec les valeurs prévues pour les autres blocs de base précédents, n'est pas nécessairement réalisée avec un ou exclusif. Par exemple, en variante, le ou exclusif est remplacé par une opération d'arithmétique modulaire.

Dans le cas de la figure 5, les différentes valeurs mémorisées par le microprocesseur 2 selon que la condition « cond » est vérifiée ou non, ne sont pas nécessairement enregistrées dans un registre dédié à cet effet. En variante, ces valeurs sont enregistrées dans un registre quelconque de l'ensemble 12.

Dans un autre mode de réalisation, les blocs de base 88 et 89 comportent chacun les instructions de comparaison « check_cnt(cnt_prec[counter], #cnt_prec) » et « check_cond(cnt_prec[flags], cnt_prec[mask], nzcv) ». Dans ce cas, avant l'instruction « branch cond, @88, @89 » le bloc de base 82 comporte l'instruction « cnt_prec := cnt » pour mémoriser la valeur construite pour la signature du bloc de base 82 dans la variable cnt_prec. Les blocs de base 88, 89, débutent chacun par une instruction d'initialisation de la valeur du compteur « cnt » à des valeurs initiales respectives. Dans ce cas également, les constantes #cnt_prec des jeux d'instructions de comparaison des blocs de base 84 et 85 sont égales aux valeurs attendues des signatures, respectivement, des blocs de base 88 et 89.

Une autre variante de l'implémentation du cas de la figure 5 consiste, comme précédemment, à placer avant l'instruction « branch cond, @88, @89 », l'instruction « cnt_prec := cnt » pour mémoriser la valeur construite pour la signature du bloc de base 82 dans la variable cnt_prec. Ensuite, pour mémoriser la valeur NZCV attendue, les instructions « cnt[flags] := #cond_true » et « cnt[mask] := #cond_true » sont ajoutées à l'intérieur du bloc de base 84. Par exemple, après l'instruction « cnt := #Init_Val1 » et avant l'instruction « check_cond(cnt_prec[flags], cnt_prec[mask], nzcv). De façon similaire, les instructions « cnt[flags] := #cond_false » et « cnt[mask] := #cond_false_mask » sont ajoutées à l'intérieur du bloc de base 85 par exemple après l'instruction « cnt := #Init_Val2 » et avant l'instruction « check_cond(cnt_prec[flags], cnt_prec[mask], nzcv). De préférence, ces instructions ajoutées dans les blocs de base 84, 85 sont traitées comme des instructions à protéger. Dans cette dernière variante, l'insertion des blocs de base supplémentaires 88 et 89 est omise.

Ce qui a été décrit dans le cas de la figure 5 peut être appliqué au cas où la condition « cond » est une condition complexe, c'est-à-dire une condition qui correspond à plus de deux valeurs NZCV différentes. Par exemple, les conditions faisant intervenir les opcodes correspondant aux conditions « ≥ » et « ≤ » sont des conditions complexes. Toutefois, toute condition complexe peut se décomposer en une succession de conditions simples. Une condition simple correspond à seulement deux valeurs NZCV différentes. Par exemple, l'opcode « ≥ » peut être remplacé par une succession de deux conditions simples, à savoir une condition qui teste la supériorité stricte et une condition qui teste l'égalité. Après avoir transformé la condition complexe en une succession de conditions simples, l'implémentation décrite en référence à la figure 5 peut être mise en œuvre.

En variante, la valeur attendue de la condition n'est pas mémorisée dans le même mot que celui qui contient la valeur attendue de la signature mais dans un registre du microprocesseur réservé à cet effet.

A la place d'utiliser la valeur NZCV, il est aussi possible d'enregistrer le statut de la condition dans un registre quelconque de l'ensemble 12 ou dans une variable.

### Variantes de l'appareil :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

Dans un mode de réalisation simplifié, le module 28 ne réalise que quelques une des opérations 1), 2) et 3) précédemment décrites et non pas toutes.

L'utilisation de plusieurs points d'entrée pour déclencher l'exécution d'une fonction sécurisée peut être mise en œuvre dans tout contexte où une modification de l'intégrité du flot de contrôle doit être détectée lors d'un appel entre fonctions sécurisées et n'a pas besoin d'être détecté lors d'un d'appel légitime à partir d'une fonction non-sécurisée. En particulier, cela peut être mis en œuvre indépendamment de la mise en œuvre des instructions « cnt++ », « cnt:= #Init_Val» et « check_cnt(cnt_prec, #cnt_prec) ».

## Revendications

1. Procédé d'exécution d'un code machine d'une fonction sécurisée par un microprocesseur, ce procédé comportant :
a) la fourniture (150) du code machine enregistré dans une mémoire principale à accès aléatoire, ce code machine étant formé par une succession de blocs de base dans lesquels :
- chaque bloc de base débute à une adresse de branchement et se termine par une instruction de branchement vers une adresse de branchement d'un autre bloc de base,
- chaque bloc de base est associé à une signature et comporte des instructions à protéger, chaque instruction à protéger étant immédiatement précédée ou suivie d'une instruction de construction de la valeur de la signature associée à ce bloc de base, l'exécution par le microprocesseur de chaque instruction de construction modifiant d'une façon prédéterminée la valeur de la signature de ce bloc de base,
- chaque bloc de base suivant qui, lors de l'exécution du code machine, est exécuté après un bloc de base précédent, comporte en plus un jeu d'instructions de comparaison qui
• déclenche la comparaison de la valeur construite de la signature associée au bloc de base précédent à une valeur attendue de cette signature déterminée lors de la génération du code machine, et
• seulement si ces valeurs ne correspondent pas, déclenche le signalement d'une faute lors de l'exécution de ce code machine et, dans le cas contraire, inhibe ce signalement,
- chaque bloc de base est divisé en une succession de mots de N bits chacun, où chacun de ces mots comporte au moins une instruction machine et N est un nombre entier constant, puis
b) le chargement (154), dans une file, uniquement par mots complets, du ou des instructions du code machine désignées par la valeur actuelle d'un compteur ordinal, puis
c) l'exécution (156), par une unité arithmétique et logique, des instructions chargées dans la file systématiquement dans l'ordre où ces instructions ont été chargées dans cette file,
**caractérisé en ce que** :
- chaque instruction de construction est codée sur strictement moins de N bits, et
- chaque mot du code machine qui comporte au moins une partie d'une desdites instructions à protéger comporte aussi l'une desdites instructions de construction.

2. Code binaire (30) comportant un code machine (32, 34) d'une fonction sécurisée pour la mise en œuvre d'un procédé d'exécution conforme à la revendication 1,dans lequel :
- ce code machine est apte être exécuté par un microprocesseur qui charge, dans une file, uniquement par mots complets, la ou les instructions du code machine désignées par la valeur actuelle d'un compteur ordinal, puis qui exécute, par une unité arithmétique et logique, les instructions chargées dans la file systématiquement dans l'ordre où ces instructions ont été chargées dans cette file, et
- ce code machine est formé par une succession de blocs de base (50, 52 ; 60-62, 64 ; 70-73, 76-77 ; 82, 84-85, 88-89) dans lesquels :
- chaque bloc de base débute à une adresse de branchement (@1, @2 ; @82, @84, @85, @88, @89) et se termine par une instruction de branchement vers une adresse de branchement d'un autre bloc de base,
- chaque bloc de base est associé à une signature et comporte des instructions à protéger (112, 114, 118, 122), chaque instruction à protéger étant immédiatement précédée ou suivie d'une instruction de construction (cnt++ ; 113, 116, 120, 124, 130, 132) de la valeur (cnt_prec) de la signature associée à ce bloc de base, l'exécution par le microprocesseur de chaque instruction de construction modifiant d'une façon prédéterminée la valeur de la signature de ce bloc de base,
- chaque bloc de base suivant qui, lors de l'exécution du code machine, est exécuté après un bloc de base précédent, comporte en plus un jeu d'instructions de comparaison (« check_cnt(cnt_prec, #cnt_prec) »), qui
• déclenche la comparaison de la valeur construite (cnt_prec) de la signature associée au bloc de base précédent à une valeur attendue (#cnt_prec) de cette signature déterminée lors de la génération du code machine, et
• seulement si ces valeurs ne correspondent pas, déclenche le signalement d'une faute lors de l'exécution de ce code machine et, dans le cas contraire, inhibe ce signalement,
- chaque bloc de base est divisé en une succession de mots (100-107) de N bits chacun, où chacun de ces mots comporte au moins une instruction machine et N est un nombre entier constant,
**caractérisé en ce que** :
- chaque instruction de construction (cnt++ ; 113, 116, 120, 124, 130, 132) est codée sur strictement moins de N bits, et
- chaque mot (100-107) du code machine qui comporte au moins une partie d'une desdites instructions à protéger (112, 114, 118, 122) comporte aussi l'une desdites instructions de construction (cnt++ ; 113, 116, 120, 124, 130, 132).

3. Code binaire selon la revendication 2, dans lequel chaque bloc de base débute par une instruction d'initialisation (« cnt := #Init_Val ») qui, lorsqu'elle est exécutée par le microprocesseur, initialise la valeur de la signature associée à ce bloc de base à une valeur initiale de sorte que la valeur attendue de la signature de ce bloc de base identifie de façon unique ce bloc de base parmi l'ensemble des blocs de base du code machine de la fonction sécurisée.

4. Code binaire selon l'une quelconque des revendications 2 à 3, dans lequel :
- le code machine comporte un bloc de base suivant (64 ; 76-77) qui, lors de l'exécution du code machine, est susceptible d'être exécuté immédiatement après un premier bloc de base précédent (60 ; 70) et, en alternance, immédiatement après un deuxième bloc de base précédent (61 ; 71),
- le premier bloc de base précédent comporte un jeu d'instructions combinatoire (« cnt_prec := cnt ⊕ B ⊕ C ») qui, lorsqu'il est exécuté par le microprocesseur, combine la valeur en cours de construction de la signature du premier bloc de base précédent à une valeur prévue (B) pour la signature du deuxième bloc de base précédent afin d'obtenir la valeur construite (cnt_prec) de la signature du premier bloc de base précédent, la valeur prévue pour la signature d'un bloc de base étant égale à la valeur construite de la signature lorsque seule les instructions de constructions associées aux instructions à protéger de ce bloc de base sont exécutées par le microprocesseur,
- le deuxième bloc de base (61 ; 71) précédent comporte un jeu d'instructions combinatoire (« cnt_prec := cnt ⊕ A ⊕ C ») qui, lorsqu'il est exécuté par le microprocesseur, combine la valeur en cours de construction de la signature du deuxième bloc de base précédent à la valeur prévue (A) pour la signature du premier bloc de base précédent afin d'obtenir la valeur construite de la signature du deuxième bloc de base précédent,
- dans le bloc de base suivant, la valeur attendue (A ⊕ B ⊕ C) de la signature du bloc de base précédent est constante et égale à la combinaison, obtenue à l'aide du même jeu d'instructions combinatoires, des valeurs prévues des signatures des premier et deuxième blocs de base précédents.

5. Code binaire selon l'une quelconque des revendications 2 à 4, dans lequel chaque instruction du jeu d'instructions de comparaison est, comme les autres instructions à protéger, immédiatement précédée ou suivie d'une instruction de construction de la valeur de la signature associée à ce bloc de base.

6. Code binaire selon l'une quelconque des revendications 2 à 5 dans lequel :
- le bloc de base précédent (82) se termine par une instruction de branchement conditionnel (« branch cond, @88, @89 ») qui, si une condition est vérifiée, provoque l'exécution d'un premier bloc de base suivant (84) et, dans le cas contraire, provoque l'exécution d'un deuxième bloc de base suivant (85), le microprocesseur mémorisant une première valeur lorsque la condition est vérifiée et une deuxième valeur différente lorsque cette condition n'est pas vérifiée,
- le premier bloc de base suivant comporte un jeu d'instructions (« check_cond(cnt_prec[flags], cnt_prec[mask], nzcv) ») qui, lorsqu'il est exécuté par le microprocesseur, compare la valeur mémorisée de la condition à une première valeur attendue pour cette condition déterminée lors de la génération du code machine et, seulement si ces valeurs ne correspondent pas, déclenche le signalement d'une faute lors de l'exécution du code machine, et dans le cas contraire, ne déclenche pas un tel signalement,
- le deuxième bloc de base suivant comporte un jeu d'instructions (« check_cond(cnt_prec[flags], cnt_prec[mask], nzcv) ») qui, lorsqu'il est exécuté par le microprocesseur, compare la valeur mémorisée de la condition à une deuxième valeur attendue pour cette condition déterminée lors de la génération du code machine et, seulement si ces valeurs ne correspondent pas, déclenche le signalement d'une faute lors de l'exécution du code machine et, dans le cas contraire, ne déclenche pas un tel signalement.

7. Code binaire selon la revendication 6, dans lequel la valeur attendue de la condition et la valeur attendue de la signature du bloc de base précédent sont codées dans un même mot de N bits.

8. Code binaire selon l'une quelconque des revendications 2 à 7, dans lequel l'instruction de construction (cnt++) est une instruction d'incrément ou de décrément d'un compteur d'un pas prédéterminé, la valeur de ce compteur étant la valeur construite de la signature associée au bloc de base exécuté.

9. Code binaire selon l'une quelconque des revendications 2 à 8, dans lequel chaque instruction de chaque bloc de base qui n'est pas une instruction de construction est une instruction à protéger.

10. Code binaire selon l'une quelconque des revendications 2 à 9, dans lequel le code binaire comporte des instructions aptes, lorsqu'elles sont exécutées par le microprocesseur, à exécuter automatiquement une contre-mesure qui limite l'usage du microprocesseur en réponse au signalement d'une faute dans l'exécution du code machine.

11. Code binaire selon l'une quelconque des revendications 2 à 10, dans lequel le code binaire comporte le code machine (32) d'une première fonction sécurisée, le code machine (34) d'une seconde fonction sécurisée apte à appeler la première fonction sécurisée ainsi que le code machine (36) d'une fonction non-sécurisée apte à appeler la première fonction sécurisée,
- le code machine (34) de la seconde fonction sécurisée comporte :
• une instruction de branchement (f(IDF)) qui, lorsqu'elle est exécutée par le microprocesseur, déclenche l'exécution de la première fonction sécurisée, et
• un jeu d'instructions (f(IDF)) apte, lorsqu'il est exécuté par le microprocesseur, à transmettre un identifiant (IDF) de la première fonction sécurisée à cette première fonction sécurisée au moment où le code machine de la seconde fonction sécurisée déclenche l'exécution de cette première fonction sécurisée,
- le code machine (32) de la première fonction sécurisée comporte un jeu d'instructions de validation (« check(IDF, #IDF) ») de l'appel à la première fonction sécurisée apte, lorsqu'il est exécuté par le microprocesseur, à comparer la valeur de l'identifiant transmis par le code machine de la seconde fonction sécurisée à une valeur attendue (#IDF) déterminée lors de la génération du code machine et, seulement si ces valeurs ne correspondent pas, à déclencher le signalement d'une faute lors de l'exécution du code machine et, dans le cas contraire, à ne pas signaler une telle faute,
- le code machine (36) de la fonction non-sécurisée comporte une instruction de branchement (f()) qui, lorsqu'elle est exécutée par le microprocesseur, déclenche l'exécution de la première fonction sécurisée, et le code machine (36) de la fonction non-sécurisée est dépourvu de jeu d'instructions apte, lorsqu'il est exécuté par le microprocesseur, à transmettre un identifiant de la première fonction sécurisée à cette première fonction sécurisée au moment où la fonction non-sécurisée déclenche l'exécution de cette première fonction sécurisée,
- la première fonction sécurisée comporte une première et une seconde adresses (@1, @2) de branchement, la première adresse (@1) de branchement étant située avant ou au début du jeu d'instructions de validation et la seconde adresse (@2) de branchement étant située après le jeu d'instructions de validation,
- l'instruction de branchement du code machine (34) de la seconde fonction sécurisée affecte au compteur ordinal la valeur de la première adresse (@1) de branchement de sorte que lorsque la première fonction sécurisée est appelée par le code machine (34) de la seconde fonction sécurisée, l'exécution du code machine (32) de la première fonction sécurisée débute avant ou par le jeu d'instructions de validation, et
- l'instruction de branchement du code machine (36) de la fonction non-sécurisée affecte au compteur ordinal la valeur de la deuxième adresse (@2) de branchement de sorte que lorsque la première fonction sécurisée est appelée par le code machine (36) de la fonction non-sécurisée, l'exécution du code machine (32) de la première fonction sécurisée débute après le jeu d'instructions de validation.

12. Code binaire selon la revendication 11, dans lequel :
- le code machine (32) de la première fonction sécurisée comporte un jeu d'instructions (« return(IDR) ») apte, lorsqu'il est exécuté par le microprocesseur, à transmettre un identifiant (IDR) de la seconde fonction sécurisée au code machine (34) de la seconde fonction sécurisée au moment où le flot d'exécution retourne de la première fonction sécurisée vers la seconde fonction sécurisée, et
- le code machine (34) de la seconde fonction sécurisée comporte un jeu d'instructions (« check(IDR, #IDR) ») de validation du retour depuis la première fonction sécurisée apte, lorsqu'il est exécuté par le microprocesseur, à comparer la valeur de l'identifiant transmis par la première fonction sécurisée à une valeur attendue (#IDR) déterminée lors de la génération du code machine et, seulement si ces valeurs ne correspondent pas, à déclencher le signalement d'une faute lors de l'exécution du code machine et, dans le cas contraire, à ne pas déclencher un tel signalement.

13. Support (4, 6) d'enregistrement d'informations, **caractérisé en ce qu'**il comporte un code binaire (30) conforme à l'une quelconque des revendications 2 à 12.

14. Appareil électronique pour la mise en œuvre d'un procédé conforme à la revendication 1, cet appareil comportant :
- une mémoire principale (4) à accès aléatoire dans laquelle est enregistré un code binaire (30) comportant le code machine (32, 34) d'une fonction sécurisée,
- un microprocesseur (2 ; 182) apte à exécuter le code machine enregistré dans la mémoire principale, ce microprocesseur étant équipé :
• d'une unité arithmétique et logique (10),
• d'une file (22) apte à être chargée avec les instructions à exécuter par l'unité arithmétique et logique systématiquement dans l'ordre où ces instructions ont été chargées dans cette file,
• d'un compteur ordinal (26),
• d'un chargeur (18) d'instructions apte à charger dans la file, uniquement par mot complet de N bits, le ou les instructions du code machine désignées par la valeur actuelle du compteur ordinal, où N est un nombre entier constant,
**caractérisé en ce que** le code binaire est conforme à l'une quelconque des revendications 2 à 12.

15. Compilateur (190) apte à transformer automatiquement un code source (192) d'un programme contenant une fonction sécurisée en un code binaire (30) comportant un code machine (32) d'une fonction sécurisée directement exécutable par un microprocesseur équipé :
- d'une unité arithmétique et logique,
- d'une file apte à être chargée avec les instructions à exécuter par l'unité arithmétique et logique systématiquement dans l'ordre où ces instructions ont été chargées dans cette file,
- d'un compteur ordinal,
- d'un chargeur d'instructions apte à charger dans la file, uniquement par mot complet de N bits, le ou les instructions du code machine désignées par la valeur actuelle du compteur ordinal, où N est un nombre entier constant,
**caractérisé en ce que** le compilateur est apte à transformer automatiquement le code source (192) en un code binaire (30) conforme à l'une quelconque des revendications 2 à 12.

## Patentansprüche

1. Verfahren zur Ausführung eines Maschinencodes einer sicheren Funktion durch einen Mikroprozessor, wobei dieses Verfahren umfasst:
a) die Bereitstellung (150) des Maschinencodes, der in einem Direktzugriffsarbeitsspeicher gespeichert ist, wobei dieser Maschinencode von einer Folge von Basisblöcken gebildet wird, wobei:
- jeder Basisblock bei einer Verzweigungsadresse beginnt und mit einer Verzweigungsanweisung zu einer Verzweigungsadresse eines anderen Basisblocks endet,
- jeder Basisblock einer Signatur zugeordnet ist und zu schützende Anweisungen umfasst, wobei jeder zu schützenden Anweisung eine Konstruktionsanweisung für den Wert der Signatur, die diesem Basisblock zugeordnet ist, unmittelbar vorangeht oder nachfolgt, wobei die Ausführung jeder Konstruktionsanweisung durch den Mikroprozessor den Wert der Signatur dieses Basisblocks auf eine vorbestimmte Weise ändert,
- jeder nachfolgende Basisblock, welcher bei der Ausführung des Maschinencodes nach einem vorhergehenden Basisblock ausgeführt wird, außerdem einen Satz von Vergleichsanweisungen umfasst, welcher
• den Vergleich des konstruierten Wertes der dem vorhergehenden Basisblock zugeordneten Signatur mit einem erwarteten Wert dieser Signatur, der bei der Erzeugung des Maschinencodes bestimmt wird, auslöst, und
• nur wenn diese Werte einander nicht entsprechen, die Signalisierung eines Fehlers bei der Ausführung dieses Maschinencodes auslöst, und im entgegengesetzten Fall diese Signalisierung verhindert,
- jeder Basisblock in eine Folge von Wörtern mit jeweils N Bits unterteilt ist, wobei jedes dieser Wörter wenigstens eine Maschinenanweisung umfasst und N eine konstante ganze Zahl ist, anschließend
b) das Laden (154), in eine Datei, ausschließlich in vollständigen Wörtern, der Anweisung oder Anweisungen des Maschinencodes, die durch den aktuellen Wert eines Befehlszählers bezeichnet werden, anschließend
c) die Ausführung (156), durch eine arithmetisch-logische Einheit, der in die Datei geladenen Anweisungen, systematisch in der Reihenfolge, in der diese Anweisungen in diese Datei geladen worden sind,
**dadurch gekennzeichnet, dass**:
- jede Konstruktionsanweisung auf einer Anzahl von Bits codiert ist, die streng kleiner als N ist, und
- jedes Wort des Maschinencodes, welches wenigstens einen Teil einer der zu schützenden Anweisungen umfasst, auch eine der Konstruktionsanweisungen umfasst.

2. Binärer Code (30), welcher einen Maschinencode (32, 34) einer sicheren Funktion für die Durchführung eines Verfahrens zur Ausführung gemäß Anspruch 1 umfasst, wobei:
- dieser Maschinencode von einem Mikroprozessor ausführbar ist, der in eine Datei, ausschließlich in vollständigen Wörtern, die Anweisung oder Anweisungen des Maschinencodes lädt, die durch den aktuellen Wert eines Befehlszählers bezeichnet werden, und der anschließend, durch eine arithmetisch-logische Einheit, die in die Datei geladenen Anweisungen systematisch in der Reihenfolge, in der diese Anweisungen in diese Datei geladen worden sind, ausführt, und
- dieser Maschinencode von einer Folge von Basisblöcken (50, 52; 60-62, 64; 70-73, 76-77; 82, 84-85, 88-89) gebildet wird, wobei:
- jeder Basisblock bei einer Verzweigungsadresse (@1, @2; @82, @84, @85, @88, @89) beginnt und mit einer Verzweigungsanweisung zu einer Verzweigungsadresse eines anderen Basisblocks endet,
- jeder Basisblock einer Signatur zugeordnet ist und zu schützende Anweisungen (112, 114, 118, 122) umfasst, wobei jeder zu schützenden Anweisung eine Konstruktionsanweisung (cnt++; 113, 116, 120, 124, 130, 132) für den Wert (cnt_prec) der Signatur, die diesem Basisblock zugeordnet ist, unmittelbar vorangeht oder nachfolgt, wobei die Ausführung jeder Konstruktionsanweisung durch den Mikroprozessor den Wert der Signatur dieses Basisblocks auf eine vorbestimmte Weise ändert,
- jeder nachfolgende Basisblock, welcher bei der Ausführung des Maschinencodes nach einem vorhergehenden Basisblock ausgeführt wird, außerdem einen Satz von Vergleichsanweisungen (« check_cnt(cnt_prec, #cnt_prec) ») umfasst, welcher
• den Vergleich des konstruierten Wertes (cnt_prec) der dem vorhergehenden Basisblock zugeordneten Signatur mit einem erwarteten Wert (#cnt_prec) dieser Signatur, der bei der Erzeugung des Maschinencodes bestimmt wird, auslöst, und
• nur falls diese Werte einander nicht entsprechen, die Signalisierung eines Fehlers bei der Ausführung dieses Maschinencodes auslöst, und im entgegengesetzten Fall diese Signalisierung verhindert,
- jeder Basisblock in eine Folge von Wörtern (100-107) mit jeweils N Bits unterteilt ist, wobei jedes dieser Wörter wenigstens eine Maschinenanweisung umfasst und N eine konstante ganze Zahl ist, **dadurch gekennzeichnet, dass**:
- jede Konstruktionsanweisung (cnt++; 113, 116, 120, 124, 130, 132) auf einer Anzahl von Bits codiert ist, die streng kleiner als N ist, und
- jedes Wort (100-107) des Maschinencodes, welches wenigstens einen Teil einer der zu schützenden Anweisungen (112, 114, 118, 122) umfasst, auch eine der Konstruktionsanweisungen (cnt++; 113, 116, 120, 124, 130, 132) umfasst.

3. Binärer Code nach Anspruch 2, wobei jeder Basisblock mit einer Initialisierungsanweisung (« cnt := #init_Val ») beginnt, welche, wenn sie vom Mikroprozessor ausgeführt wird, den Wert der diesem Basisblock zugeordneten Signatur mit einem Anfangswert initialisiert, derart, dass der erwartete Wert der Signatur dieses Basisblocks diesen Bassblock auf eindeutige Weise in der Gesamtheit der Basisblöcke des Maschinencodes der sicheren Funktion identifiziert.

4. Binärer Code nach einem der Ansprüche 2 bis 3, wobei:
- der Maschinencode einen nachfolgenden Basisblock (64; 76-77) umfasst, welcher bei der Ausführung des Maschinencodes unmittelbar nach einem ersten vorhergehenden Basisblock (60; 70) und, wechselweise, unmittelbar nach einem zweiten vorhergehenden Basisblock (61; 71) ausführbar ist,
- der erste vorhergehende Basisblock einen kombinatorischen Anweisungssatz (« cnt_prec := cnt ⊕ B ⊕ C ») umfasst, welcher, wenn er von dem Mikroprozessor ausgeführt wird, den in Konstruktion befindlichen Wert der Signatur des ersten vorhergehenden Basisblocks mit einem vorgesehenen Wert (B) für die Signatur des zweiten vorhergehenden Basisblocks kombiniert, um den konstruierten Wert (cnt_prec) der Signatur des ersten vorhergehenden Basisblocks zu erhalten, wobei der vorgesehene Wert für die Signatur eines Basisblocks gleich dem konstruierten Wert der Signatur ist, wenn nur die Konstruktionsanweisungen, die den zu schützenden Anweisungen dieses Basisblocks zugeordnet sind, von dem Mikroprozessor ausgeführt werden,
- der zweite vorhergehende Basisblock (61; 71) einen kombinatorischen Anweisungssatz (« cnt_prec := cnt ⊕ A ⊕ C ») umfasst, welcher, wenn er von dem Mikroprozessor ausgeführt wird, den in Konstruktion befindlichen Wert der Signatur des zweiten vorhergehenden Basisblocks mit dem vorgesehenen Wert (A) für die Signatur des ersten vorhergehenden Basisblocks kombiniert, um den konstruierten Wert der Signatur des zweiten vorhergehenden Basisblocks zu erhalten,
- in dem nachfolgenden Basisblock der erwartete Wert (A ⊕ B ⊕ C) der Signatur des vorhergehenden Basisblocks konstant und gleich der mithilfe desselben Satzes von kombinatorischen Anweisungen erhaltenen Kombination der vorgesehenen Werte der Signaturen des ersten und des zweiten vorhergehenden Basisblocks ist.

5. Binärer Code nach einem der Ansprüche 2 bis 4, wobei jeder Anweisung des Satzes von Vergleichsanweisungen, wie den anderen zu schützenden Anweisungen, eine Konstruktionsanweisung für den Wert der Signatur, die diesem Basisblock zugeordnet ist, unmittelbar vorangeht oder nachfolgt.

6. Binärer Code nach einem der Ansprüche 2 bis 5, wobei:
- der vorhergehende Basisblock (82) mit einer bedingten Verzweigungsanweisung (« branch cond, @88, @89 ») endet, welche, falls eine Bedingung erfüllt ist, die Ausführung eines ersten nachfolgenden Basisblocks (84) hervorruft, und im entgegengesetzten Fall die Ausführung eines zweiten nachfolgenden Basisblocks (85) hervorruft, wobei der Mikroprozessor einen ersten Wert speichert, wenn die Bedingung erfüllt ist, und einen zweiten, anderen Wert, wenn diese Bedingung nicht erfüllt ist,
- der erste nachfolgende Basisblock einen Anweisungssatz (« check_cond(cnt_prec[flags], cnt_prec[mask], nzcv) ») umfasst, welcher, wenn er von dem Mikroprozessor ausgeführt wird, den gespeicherten Wert der Bedingung mit einem ersten erwarteten Wert für diese Bedingung, der bei der Erzeugung des Maschinencodes bestimmt wird, vergleicht und nur dann, wenn diese Werte einander nicht entsprechen, die Signalisierung eines Fehlers bei der Ausführung des Maschinencodes auslöst, und im entgegengesetzten Fall keine solche Signalisierung auslöst,
- der zweite nachfolgende Basisblock einen Anweisungssatz (« check_cond(cnt_prec[flags], cnt_prec[mask], nzcv) ») umfasst, welcher, wenn er von dem Mikroprozessor ausgeführt wird, den gespeicherten Wert der Bedingung mit einem zweiten erwarteten Wert für diese Bedingung, der bei der Erzeugung des Maschinencodes bestimmt wird, vergleicht und nur dann, wenn diese Werte einander nicht entsprechen, die Signalisierung eines Fehlers bei der Ausführung des Maschinencodes auslöst, und im entgegengesetzten Fall keine solche Signalisierung auslöst.

7. Binärer Code nach Anspruch 6, wobei der erwartete Wert der Bedingung und der erwartete Wert der Signatur des vorhergehenden Basisblocks in ein und demselben Wort mit N Bits codiert sind.

8. Binärer Code nach einem der Ansprüche 2 bis 7, wobei die Konstruktionsanweisung (cnt++) eine Anweisung zum Inkrementieren oder Dekrementieren eines Zählers um einen vorbestimmten Schritt ist, wobei der Wert dieses Zählers der konstruierte Wert der Signatur ist, die dem ausgeführten Basisblock zugeordnet ist.

9. Binärer Code nach einem der Ansprüche 2 bis 8, wobei jede Anweisung jedes Basisblocks, welche keine Konstruktionsanweisung ist, eine zu schützende Anweisung ist.

10. Binärer Code nach einem der Ansprüche 2 bis 9, wobei der binäre Code Anweisungen umfasst, die geeignet sind, wenn sie von dem Mikroprozessor ausgeführt werden, in Reaktion auf die Signalisierung eines Fehlers bei der Ausführung des Maschinencodes automatisch eine Gegenmaßnahme auszuführen, welche die Verwendung des Mikroprozessors begrenzt.

11. Binärer Code nach einem der Ansprüche 2 bis 10, wobei der binäre Code den Maschinencode (32) einer ersten sicheren Funktion, den Maschinencode (34) einer zweiten sicheren Funktion, die geeignet ist, die erste sichere Funktion aufzurufen, sowie den Maschinencode (36) einer nicht sicheren Funktion, die geeignet ist, die erste sichere Funktion aufzurufen, umfasst,
- wobei der Maschinencode (34) der zweiten sicheren Funktion umfasst:
• eine Verzweigungsanweisung (f(IDF)), welche, wenn sie von dem Mikroprozessor ausgeführt wird, die Ausführung der ersten sicheren Funktion auslöst, und
• einen Anweisungssatz (f(IDF)), der geeignet ist, wenn er von dem Mikroprozessor ausgeführt wird, eine Kennung (IDF) der ersten sicheren Funktion an diese erste sichere Funktion zu dem Zeitpunkt zu übertragen, zu dem der Maschinencode der zweiten sicheren Funktion die Ausführung dieser ersten sicheren Funktion auslöst,
- wobei der Maschinencode (32) der ersten sicheren Funktion einen Anweisungssatz zur Validierung (« check(IDF, #IDF) ») des Aufrufs der ersten sicheren Funktion umfasst, der geeignet ist, wenn er von dem Mikroprozessor ausgeführt wird, den Wert der Kennung, die durch den Maschinencode der zweiten sicheren Funktion übertragen wird, mit einem erwarteten Wert (#IDF), der bei der Erzeugung des Maschinencodes bestimmt wird, zu vergleichen, und nur wenn diese Werte einander nicht entsprechen, die Signalisierung eines Fehlers bei der Ausführung des Maschinencodes auszulösen, und im entgegengesetzten Fall keinen solchen Fehler zu signalisieren,
- wobei der Maschinencode (36) der nicht sicheren Funktion eine Verzweigungsanweisung (f()) umfasst, welche, wenn sie von dem Mikroprozessor ausgeführt wird, die Ausführung der ersten sicheren Funktion auslöst, und der Maschinencode (36) der nicht sicheren Funktion nicht mit einem Anweisungssatz versehen ist, der geeignet ist, wenn er von dem Mikroprozessor ausgeführt wird, eine Kennung der ersten sicheren Funktion an diese erste sichere Funktion zu dem Zeitpunkt zu übertragen, zu dem die nicht sichere Funktion die Ausführung dieser ersten sicheren Funktion auslöst,
- wobei die erste sichere Funktion eine erste und eine zweite Verzweigungsadresse (@1, @2) umfasst, wobei die erste Verzweigungsadresse (@1) sich vor dem Anweisungssatz zur Validierung oder an dessen Anfang befindet und die zweite Verzweigungsadresse (@2) sich nach dem Anweisungssatz zur Validierung befindet,
- wobei die Verzweigungsanweisung des Maschinencodes (34) der zweiten sicheren Funktion dem Befehlszähler den Wert der ersten Verzweigungsadresse (@1) zuweist, derart, dass, wenn die erste sichere Funktion von dem Maschinencode (34) der zweiten sicheren Funktion aufgerufen wird, die Ausführung des Maschinencodes (32) der ersten sicheren Funktion vor dem Anweisungssatz zur Validierung oder durch diesen beginnt, und
- wobei die Verzweigungsanweisung des Maschinencodes (36) der nicht sicheren Funktion dem Befehlszähler den Wert der zweiten Verzweigungsadresse (@2) zuweist, derart, dass, wenn die erste sichere Funktion von dem Maschinencode (36) der nicht sicheren Funktion aufgerufen wird, die Ausführung des Maschinencodes (32) der ersten sicheren Funktion nach dem Anweisungssatz zur Validierung beginnt.

12. Binärer Code nach Anspruch 11, wobei:
- der Maschinencode (32) der ersten sicheren Funktion einen Anweisungssatz (« return(IDR) ») umfasst, der geeignet ist, wenn er von dem Mikroprozessor ausgeführt wird, eine Kennung (IDR) der zweiten sicheren Funktion an den Maschinencode (34) der zweiten sicheren Funktion zu dem Zeitpunkt zu übertragen, zu dem der Kontrollfluss von der ersten sicheren Funktion zu der zweiten sicheren Funktion zurückkehrt, und
- der Maschinencode (34) der zweiten sicheren Funktion einen Anweisungssatz (« check(IDR, #IDR) ») zur Validierung der Rückkehr von der ersten sicheren Funktion umfasst, der geeignet ist, wenn er von dem Mikroprozessor ausgeführt wird, den Wert der Kennung, die von der ersten sicheren Funktion übertragen wird, mit einem erwarteten Wert (#IDR), der bei der Erzeugung des Maschinencodes bestimmt wird, zu vergleichen, und nur wenn diese Werte einander nicht entsprechen, die Signalisierung eines Fehlers bei der Ausführung des Maschinencodes auszulösen, und im entgegengesetzten Fall keine solche Signalisierung auszulösen.

13. Informationsaufzeichnungsmedium (4, 6), **dadurch gekennzeichnet, dass** es einen binären Code (30) gemäß einem der Ansprüche 2 bis 12 umfasst.

14. Elektronisches Gerät zur Durchführung eines Verfahrens gemäß Anspruch 1, wobei dieses Gerät aufweist:
- einen Direktzugriffsarbeitsspeicher (4), in welchem ein binärer Code (30) gespeichert ist, der den Maschinencode (32, 34) einer sicheren Funktion umfasst,
- einen Mikroprozessor (2; 182), der geeignet ist, den in dem Arbeitsspeicher gespeicherten Maschinencode auszuführen, wobei dieser Mikroprozessor ausgestattet ist:
• mit einer arithmetisch-logischen Einheit (10),
• mit einer Datei (22), die geeignet ist, mit den Anweisungen geladen zu werden, die von der arithmetisch-logischen Einheit systematisch in der Reihenfolge, in der diese Anweisungen in diese Datei geladen worden sind, auszuführen sind,
• mit einem Befehlszähler (26),
• mit einem Befehlslader (18), der geeignet ist, die Anweisung oder Anweisungen des Maschinencodes, die durch den aktuellen Wert des Befehlszählers bezeichnet werden, ausschließlich in vollständigen Wörtern mit N Bits in die Datei zu laden, wobei N eine konstante ganze Zahl ist,
**dadurch gekennzeichnet, dass** der binäre Code einem der Ansprüche 2 bis 12 entspricht.

15. Compiler (190), welcher geeignet ist, einen Quellcode (192) eines Programms, das eine sichere Funktion enthält, automatisch in einen binären Code (30) umzuwandeln, der einen Maschinencode (32) einer sicheren Funktion umfasst, der von einem Mikroprozessor direkt ausführbar ist, welcher ausgestattet ist:
- mit einer arithmetisch-logischen Einheit,
- mit einer Datei, die geeignet ist, mit den Anweisungen geladen zu werden, die von der arithmetisch-logischen Einheit systematisch in der Reihenfolge, in der diese Anweisungen in diese Datei geladen worden sind, auszuführen sind,
- mit einem Befehlszähler,
- mit einem Befehlslader, der geeignet ist, die Anweisung oder Anweisungen des Maschinencodes, die durch den aktuellen Wert des Befehlszählers bezeichnet werden, ausschließlich in vollständigen Wörtern mit N Bits in die Datei zu laden, wobei N eine konstante ganze Zahl ist,
**dadurch gekennzeichnet, dass** der Compiler geeignet ist, den Quellcode (192) automatisch in einen binären Code (30) gemäß einem der Ansprüche 2 bis 12 umzuwandeln.

## Claims

1. Method for the execution of a machine code of a secure function by a microprocessor, this method comprising:
a) providing (150) the machine code recorded in a main random access memory, this machine code being formed by a sequence of basic blocks in which:
- each basic block starts at a branching address and ends with a branch instruction to a branching address of another basic block,
- each basic block is associated with a signature and contains instructions to be protected, each instruction to be protected being immediately preceded or followed by a construction instruction to construct the value of the signature associated with this basic block, the execution of each construction instruction by the microprocessor modifying the value of the signature of this basic block in a predetermined manner,
- each following basic block that is executed after a preceding basic block when the machine code is executed additionally contains a set of comparison instructions that
• triggers the comparison of the constructed value of the signature associated with the preceding basic block with an expected value of this signature determined when the machine code is generated, and
• only if these values do not match, triggers the signalling of an error when this machine code is executed and, in the opposite case, blocks this signalling,
- each basic block is divided into a sequence of words each of N bits, where each of these words contains at least one machine instruction, and N is a constant integer, and then
b) loading (154) the machine code instruction or instructions designated by the current value of an ordinal counter into a queue, solely by complete words, and then
c) executing (156), by way of an arithmetic logic unit, the instructions loaded into the queue systematically in the order in which these instructions were loaded into this queue,
**characterized in that**:
- each construction instruction is coded on strictly fewer than N bits, and
- each word of the machine code that contains at least part of one of said instructions to be protected also contains one of said construction instructions.

2. Binary code (30) containing a machine code (32, 34) of a secure function for implementing an execution method according to Claim 1, wherein:
- this machine code is able to be executed by a microprocessor that loads the instruction or instructions of the machine code designated by the current value of an ordinal counter into a queue, solely by complete words, and then which executes, by way of an arithmetic logic unit, the instructions loaded into the queue systematically in the order in which these instructions were loaded into this queue, and
- this machine code is formed by a sequence of basic blocks (50, 52; 60-62, 64, 70-73, 76-77; 82, 84-85, 88-89) in which:
- each basic block starts at a branching address (@1, @2; @82, @84, @85, @88, @89) and ends with a branch instruction to another branching address of another basic block,
- each basic block is associated with a signature and contains instructions to be protected (112, 114, 118, 122), each instruction to be protected being immediately preceded or followed by a construction instruction (cnt++, 113, 116, 120, 124, 130, 132) to construct the value (cnt_prec) of the signature associated with this basic block, the execution of each construction instruction by the microprocessor modifying the value of the signature of this basic block in a predetermined manner,
- each following basic block that is executed after a preceding basic block when the machine code is executed additionally contains a set of comparison instructions ("check_cnt(cnt_prec, #cnt_prec)") that
o triggers the comparison of the constructed value (cnt_prec) of the signature associated with the preceding basic block with an expected value (#cnt_prec) of this signature determined when the machine code is generated, and
o only if these values do not match, triggers the signalling of an error when this machine code is executed and, in the opposite case, blocks this signalling,
- each basic block is divided into a sequence of words (100-107) each of N bits, where each of these words contains at least one machine instruction, and N is a constant integer,
**characterized in that**:
- each construction instruction (cnt++; 113, 116, 120, 124, 130, 132) is coded on strictly fewer than N bits, and
- each word (100-107) of the machine code that contains at least part of one of said instructions to be protected (112, 114, 118, 122) also contains one of said construction instructions (cnt++; 113, 116, 120, 124, 130, 132) .

3. Binary code according to Claim 2, wherein each basic block starts with an initialization instruction ("cnt:= #Init_Val") that, when it is executed by the microprocessor, initializes the value of the signature associated with this basic block to an initial value, such that the expected value of the signature of this basic block uniquely identifies this basic block from among all of the basic blocks of the machine code of the secure function.

4. Binary code according to either one of Claims 2 and 3, wherein:
- the machine code contains a following basic block (64; 76-77) that, when the machine code is executed, is liable to be executed immediately after a first preceding basic block (60; 70) and, alternately, immediately after a second preceding basic block (61; 71),
- the first preceding basic block contains a set of combinatorial instructions ("cnt_prec:= cnt ⊕ B ⊕ C") that, when it is executed by the microprocessor, combines the value currently being constructed of the signature of the first previous basic block with an expected value (B) for the signature of the second preceding basic block in order to obtain the constructed value (cnt_prec) of the signature of the first preceding basic block, the expected value for the signature of a basic block being equal to the constructed value of the signature when only the construction instructions associated with the instructions to be protected of this basic block are executed by the microprocessor,
- the second preceding basic block (61; 71) contains a set of combinatorial instructions ("cnt_prec:= cnt ⊕ A ⊕ C") that, when it is executed by the microprocessor, combines the value currently being constructed of the signature of the second preceding basic block with the expected value (A) for the signature of the first preceding basic block in order to obtain the constructed value of the signature of the second preceding basic block,
- in the following basic block, the expected value (A ⊕ B ⊕ C) of the signature of the preceding basic block is constant and equal to the combination of the expected values of the signatures of the first and second preceding basic blocks as obtained using the same set of combinatorial instructions.

5. Binary code according to any one of Claims 2 to 4, wherein each instruction of the set of comparison instructions is, like the other instructions to be protected, immediately preceded or followed by a construction instruction to construct the value of the signature associated with this basic block.

6. Binary code according to any one of Claims 2 to 5, wherein:
- the preceding basic block (82) ends with a conditional branch instruction ("branch cond, @88, @89") that, if a condition is met, causes the execution of a first following basic block (84) and, in the opposite case, causes the execution of a second following basic block (85), the microprocessor storing a first value when the condition is met and a different second value when this condition is not met,
- the first following basic block contains a set of instructions ("check_cond(cnt_prec[flags], cnt_prec[mask], nzcv)") that, when it is executed by the microprocessor, compares the stored value of the condition with a first expected value for this condition that is determined when the machine code is generated and, only if these values do not match, triggers the signalling of an error when the machine code is executed, and in the opposite case does not trigger such signalling,
- the second following basic block contains a set of instructions ("check_cond(cnt_prec[flags], cnt_prec[mask], nzcv)") that, when it is executed by the microprocessor, compares the stored value of the condition with a second expected value for this condition that is determined when the machine code is generated and, only if these values do not match, triggers the signalling of an error when the machine code is executed, and in the opposite case does not trigger such signalling.

7. Binary code according to Claim 6, wherein the expected value of the condition and the expected value of the signature of the preceding basic block are coded in one and the same N-bit word.

8. Binary code according to any one of Claims 2 to 7, wherein the construction instruction (cnt++) is an instruction to increment or decrement a counter by a predetermined level, the value of this counter being the constructed value of the signature associated with the basic block that is executed.

9. Binary code according to any one of Claims 2 to 8, wherein each instruction of each basic block that is not a construction instruction is an instruction to be protected.

10. Binary code according to any one of Claims 2 to 9, wherein the binary code contains instructions that are able, when they are executed by the microprocessor, to automatically execute a countermeasure that limits the use of the microprocessor in response to the signalling of an error in the execution of the machine code.

11. Binary code according to any one of Claims 2 to 10, wherein the binary code contains the machine code (32) of a first secure function, the machine code (34) of a second secure function able to call the first secure function and the machine code (36) of a non-secure function able to call the first secure function,
- the machine code (34) of the second secure function contains:
• a branch instruction (f(IDF)) that, when it is executed by the microprocessor, triggers the execution of the first secure function, and
• a set of instructions (f(IDF)) that is able, when it is executed by the microprocessor, to transmit an identifier (IDF) of the first secure function to this first secure function at the time when the machine code of the second secure function triggers the execution of this first secure function,
- the machine code (32) of the first secure function contains a set of validation instructions ("check(IDF, #IDF)") for validating the call to the first secure function that is able, when it is executed by the microprocessor, to compare the value of the identifier transmitted by the machine code of the second secure function with an expected value (#IDF) determined when the machine code is generated and, only if these values do not match, to trigger the signalling of an error when the machine code is executed and, in the opposite case, not to signal such an error,
- the machine code (36) of the non-secure function contains a branch instruction (f()) that, when it is executed by the microprocessor, triggers the execution of the first secure function, and the machine code (36) of the non-secure function does not contain a set of instructions that is able, when it is executed by the microprocessor, to transmit an identifier of the first secure function to this first secure function at the time when the non-secure function triggers the execution of this first secure function,
- the first secure function contains a first and a second branching address (@1, @2), the first branching address (@1) being located before or at the start of the set of validation instructions and the second branching address (@2) being located after the set of validation instructions,
- the branch instruction of the machine code (34) of the second secure function assigns the ordinal counter the value of the first branching address (@1) such that, when the first secure function is called by the machine code (34) of the second secure function, the execution of the machine code (32) of the first secure function starts before or with the set of validation instructions, and
- the branch instruction of the machine code (36) of the non-secure function assigns the ordinal counter the value of the second branching address (@2) such that, when the first secure function is called by the machine code (36) of the non-secure function, the execution of the machine code (32) of the first secure function starts after the set of validation instructions.

12. Binary code according to Claim 11, wherein:
- the machine code (32) of the first secure function contains a set of instructions ("return(IDR)") that is able, when it is executed by the microprocessor, to transmit an identifier (IDR) of the second secure function to the machine code (34) of the second secure function at the time when the execution flow returns from the first secure function to the second secure function, and
- the machine code (34) of the second secure function contains a set of validation instructions ("check(IDR, #IDR)") for validating the return from the first secure function that is able, when it is executed by the microprocessor, to compare the value of the identifier transmitted by the first secure function with an expected value (#IDR) determined when the machine code is generated and, only if these values do not match, to trigger the signalling of an error when the machine code is executed and, in the opposite case, not to trigger such signalling.

13. Information recording medium (4, 6), **characterized in that** it contains a binary code (30) according to any one of Claims 2 to 12.

14. Electronic device for implementing a method according to Claim 1, this device comprising:
- a main random access memory (4) in which there is recorded a binary code (30) containing the machine code (32, 34) of a secure function,
- a microprocessor (2; 182) able to execute the machine code recorded in the main memory, this microprocessor being equipped with:
• an arithmetic logic unit (10),
• a queue (22) able to be loaded with the instructions to be executed by the arithmetic logic unit systematically in the order in which these instructions were loaded into this queue,
• an ordinal counter (26),
• an instruction loader (18) able to load the instruction or instructions of the machine code designated by the current value of the ordinal counter into the queue solely by complete N-bit word, where N is a constant integer,
**characterized in that** the binary code is in accordance with any one of Claims 2 to 12.

15. Compiler (190) able to automatically convert a source code (192) of a program containing a secure function into a binary code (30) containing a machine code (32) of a secure function able to be executed directly by a microprocessor equipped with:
- an arithmetic logic unit,
- a queue able to be loaded with the instructions to be executed by the arithmetic logic unit systematically in the order in which these instructions were loaded into this queue,
- an ordinal counter,
- an instruction loader able to load the instruction or instructions of the machine code designated by the current value of the ordinal counter into the queue solely by complete N-bit word, where N is a constant integer,
**characterized in that** the compiler is able to automatically convert the source code (192) into a binary code (30) according to any one of Claims 2 to 12.
